(19) Europäisches Patentamt / European Patent Office / Office européen des brevets

(11) EP 2 267 073 B1

# (12) EUROPEAN PATENT SPECIFICATION

(45) Date of publication and mention of the grant of the patent:
**02.11.2016 Bulletin 2016/44**

(21) Application number: **09728795.7**

(22) Date of filing: **31.03.2009**

(51) Int Cl.:
***C08J 5/18*** (2006.01) ***C08L 29/04*** (2006.01)
***B60C 5/14*** (2006.01) ***B60C 1/00*** (2006.01)
*C08L 23/26* (2006.01) *C08L 15/00* (2006.01)

(86) International application number:
**PCT/JP2009/056735**

(87) International publication number:
**WO 2009/123229 (08.10.2009 Gazette 2009/41)**

## (54) FILM, INNER LINER FOR TIRE, AND TIRE USING THE INNER LINER

FILM, INNERLINER FÜR REIFEN UND REIFEN MIT DEM INNERLINER

FILM, CARCASSE POUR PNEU, ET PNEU UTILISANT LADITE CARCASSE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **31.03.2008 JP 2008093149**
**30.03.2009 JP 2009083356**

(43) Date of publication of application:
**29.12.2010 Bulletin 2010/52**

(73) Proprietors:
- **Bridgestone Corporation**
  **Tokyo 104-8340 (JP)**
- **Kuraray Co., Ltd.**
  **Kurashiki-shi**
  **Okayama 710-8622 (JP)**

(72) Inventors:
- **TAKAHASHI, Yuwa**
  **Kodaira-shi**
  **Tokyo 187-8531 (JP)**
- **NOHARA, Daisuke**
  **Kodaira-shi**
  **Tokyo 187-8531 (JP)**
- **NAKAGAWA, Daisuke**
  **Kodaira-shi**
  **Tokyo 187-8531 (JP)**
- **ISOYAMA, Kouta**
  **Okayama-shi**
  **Okayama 702-8601 (JP)**

(74) Representative: **Oxley, Robin John George et al**
**Marks & Clerk LLP**
**90 Long Acre**
**London WC2E 9RA (GB)**

(56) References cited:
**EP-A1- 1 837 373**
**WO-A1-03/072653**
**WO-A1-2007/083785**
**WO-A1-2008/013152**
**JP-A- 2004 176 048**
**JP-A- 2006 248 445**
**JP-A- 2007 008 186**
**JP-A- 2008 024 217**

- **DATABASE WPI Week 200827 Thomson Scientific, London, GB; AN 2008-D74633 XP000002657032, -& JP 2008 024220 A (BRIDGESTONE CORP) 7 February 2008 (2008-02-07)**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 267 073 B1

## Description

Technical Field

The present invention relates to a film applicable to an inner liner for tire, which film has excellent gas barrier properties and bending resistance, allows weight of a tire to be reduced with improving internal pressure retainability of the tire at both the brand-new stage and the used stage thereof, and is capable of demonstrating good gas barrier properties without breaking especially in a running condition at a relatively low temperature in winter time.

Prior Art

A rubber component primarily made of butyl rubber, halogenated butyl rubber is conventionally used for an inner liner provided as an air barrier layer at the inner surface of a tire to retain an internal pressure of the tire. In a case where such a rubber composition using butyl-based rubber as main ingredient as described above is used for an inner liner, since the rubber composition has relatively poor air barrier properties, it is necessary to set thickness of the inner liner at approximately 1 mm. As a result, the weight of the inner liner reaches approximately 5% of the total weight of the tire, making it difficult to reduce the tire weight to improve fuel consumption of automobile, agricultural vehicle, construction vehicle and the like.

On the other hand, ethylene-vinyl alcohol copolymer (which may be referred to simply "EVOH" hereinafter) is known to be excellent in gas barrier properties. The air permeability of EVOH is not larger than 1/100 of that of butyl-based rubber described above. Therefore, in a case where EVOH is used for an inner liner, EVOH can significantly improve internal pressure retainability of a tire even if the thickness of the inner liner is 100μm or less. Further, EVOH can reduce the tire weight, as well.

Although there exist not a few types of resins having lower air permeability than butyl-based rubber described above, in a case of a resin of which air permeability is one tenths or so of that of butyl-based rubber, an effect of improving internal pressure retainability caused by such a resin cannot be sufficiently obtained unless the thickness of an inner liner exceeds 100μm. In a case where the thickness of an inner liner exceeds 100μm, however, not only an effect of reducing tire weight is relatively small but also the inner liner may break or have cracks generated therein due to deformation during tire bending, whereby it is difficult to retain good gas barrier properties after all. In view of this circumstance, in the case of such a resin as described above, there has been disclosed a technique of using for an inner liner a compound, obtained by blending a nylon resin having the melting point of 170-230°C with an elastomer containing a halide of isobutylene/para-methyl styrene copolymer, in order to improve bending resistance (JP 11-199713). However, the technique of JP 11-199713 causes a problem that, although bending resistance improves, good gas barrier properties possessed by the nylon resin cannot be retained because of a relatively high proportion of the elastobmer with respect to the resin.

In contrast, in a case where EVOH is used for an inner liner, since the thickness of the inner liner can be reduced to 100μm or less, the inner liner is less likely to break or have cracks generated therein due to bending deformation during rotation of a tire. Accordingly, it can be said that use of EVOH for an inner liner of a tire is effective in terms of improving internal pressure retainability of a pneumatic tire. For example, JP 06-040207 Laid-Open discloses a pneumatic tire having an inner liner made of EVOH.

However, in a case where ordinary EVOH is used for an inner liner, there is a possibility that, although a relatively good effect of improving internal pressure retainability of a tire is obtained, the inner liner may still break and/or have cracks generated therein due to deformation during tire bending because modulus of elasticity of ordinary EVOH is significantly larger than that of rubber conventionally used for a tire. Therefore, when an inner liner made of ordinary EVOH is used, although the internal pressure retainability of the inner liner prior to use of a tire significantly improves, the internal pressure retainability of the inner liner in a tire after use, which tire has been bend-deformed during rotation of the tire, may deteriorate as compared with the internal pressure retainability prior to use of the tire. As a means for solving this problem, there has been disclosed in JP 2002-052904 Laid-Open a technique of using in an inner liner a composite film composed of: 60 to 99 wt. % of ethylene-vinyl alcohol copolymer having at least of 85% saponification value and containing 20 to 70 mol % of ethylene; and 1 to 40 wt. % of hydrophobic plasticizer.

Further, JP 2004-176048 Laid-Open discloses a technique of using in an inner liner a modified ethylene-vinyl alcohol copolymer obtained by reacting 1 to 50 parts by weight of an epoxy compound with 100 parts by weight of an ethylene-vinyl alcohol copolymer containing 25 to 50 mol % of ethylene. JP 2004-176048 states that the inner liner thereof exhibits higher bending resistance, while retaining good gas barrier properties, as compared with an inner liner made of conventional EVOH for a tire.

However, the inner liner disclosed in JP 2004-176048 easily breaks and cannot demonstrate good gas barrier properties because bending resistance and softness thereof in a running condition at relatively low temperature in winter time or the like are not sufficient, thereby still leaving room for improvement.

Documents EP 2 045 102 A1 and JP 2008 024220 A disclose compositions, films and tires comprising a viscoelastic substance having 100% modulus (JIS K6251 at -30°C) of more than 6 MPa.

Disclosure of the Invention

In view of the facts described above, an object of the present invention is to provide a film applicable to an inner liner for tire, which film has excellent gas barrier properties and bending resistance, allows weight of a tire to be reduced and is less likely to break in a running condition at a relatively low temperature in winter time or the like.

As a result of a keen study for achieving the object described above, the inventors of the present invention have discovered that: an inner liner, using a film characterized in that the film includes at least a layer composed of resin composition (D) produced by dispersing viscoelastic substance (C) in a resin containing modified ethylene-vinyl alcohol copolymer (B) obtained by reacting 1 to 50 parts by mass of an epoxy compound (E) with 100 parts by mass of ethylene-vinyl alcohol copolymer (A), wherein 100% modulus measured according to JIS K6251-1993 by using JIS No. 3 dumbbell-shape test piece at -30°C of the viscoelastic substance (C) is smaller than 6MPa, has excellent gas barrier properties and bending resistance and is less likely to break in a running condition at a relatively low temperature in winter time or the like; and a tire provided with the inner liner exhibits excellent internal pressure retainability at both the brand-new stage and the used stage thereof, thereby completing the present invention.

Specifically, the film of the present invention includes at least a layer composed of resin composition (D) produced by dispersing viscoelastic substance (C) in a resin containing modified ethylene-vinyl alcohol copolymer (B) obtained by reacting 1 to 50 parts by mass of an epoxy compound (E) with 100 parts by mass of ethylene-vinyl alcohol copolymer (A), wherein 100% modulus measured according to JIS K6251-1993 by using JIS No. 3 dumbbell-shape test piece at -30°C of the viscoelastic substance (C) is smaller than 6MPa.

Further, in a preferable example of the film of the present invention, the viscoelastic substance (C) contains soft polymer having a functional group which exhibits relatively high affinity for hydroxyl group.

Yet further, in yet another preferable example of the film of the present invention, the saponification value of the ethylene-vinyl alcohol copolymer is 90% or higher.

Yet further, in yet another preferable example of the film of the present invention, the molecular weight of the epoxy compound (E) is not larger than 500.

Yet further, in yet another preferable example of the film of the present invention, the epoxy compound (E) is glycidol or epoxypropane.

Yet further, in yet another preferable example of the film of the present invention, a content of ethylene in the ethylene-vinyl alcohol copolymer is in the range of 25 to 50 mol %.

Yet further, in yet another preferable example of the film of the present invention, Young's modulus at -30°C of the resin composition (D) is not larger than 1500 MPa.

Yet further, in yet another preferable example of the film of the present invention, a content of the viscoelastic substance (C) in the resin composition (D) is in the range of 10 to 70 mass %.

Yet further, in yet another preferable example of the film of the present invention, the average particle diameter of the viscoelastic substance (C) is not larger than 5 $\mu$m.

Yet further, in yet another preferable example of the film of the present invention, the layer composed of the resin composition (D) is cross-linked.

Yet further, in yet another preferable example of the film of the present invention, the layer composed of the resin composition (D) has oxygen permeability at 20°C and 65%RH not larger than $3.0 \times 10^{-12}$ $cm^3 \cdot cm/cm^2$ sec cm Hg.

Yet further, in yet another preferable example of the film of the present invention, thickness of each layer composed of the resin composition (D) is not larger than 500$\mu$m.

Yet further, in yet another preferable example of the film of the present invention, at least one auxiliary layer (F) composed of elastomer is provided adjacent to the layer composed of the resin composition (D).

Yet further, in yet another preferable example of the film of the present invention, the elastomer is selected from the group consisting of olefin-based elastomer, diene-based elastomer, hydrogenated diene-based elastomer, and urethane-based elastomer.

Yet further, in yet another preferable example of the film of the present invention, the layer composed of the resin composition (D) is interposed between the auxiliary layers (F).

Yet further, in yet another preferable example of the film of the present invention, at least one adhesive layer (G) is provided at at least one of: between the layer composed of the resin composition (D) and the auxiliary layer (F) adjacent thereto; and between the adjacent auxiliary layers (F).

Yet further, in yet another preferable example of the film of the present invention, each auxiliary layer (F) has oxygen permeability at 20°C and 65%RH not larger than $3.0 \times 10^{-9} cm^3 \cdot cm/cm^2 \cdot sec \cdot cm$ Hg.

Yet further, in yet another preferable example of the film of the present invention, each auxiliary layer (F) includes butyl rubber and/or halogenated butyl rubber.

Yet further, in yet another preferable example of the film of the present invention, each auxiliary layer (F) includes diene-based elastomer.

Yet further, in yet another preferable example of the film of the present invention, each auxiliary layer (F) includes thermoplastic urethane-based elastomer.

Yet further, in yet another preferable example of the film of the present invention, the sum of the thicknesses of the auxiliary layers (F) is in the range of 10 to 2000 μm.

Yet further, an inner liner for tire of the present invention uses the film of any of the aforementioned aspects. Yet further, a tire of the present invention includes this inner liner for tire.

Yet further, in a preferable example of the tire of the present invention, the tire comprises an inner liner for tire, the inner liner using the film of any of the aforementioned aspects, wherein the sum of thicknesses of the auxiliary layers (F) at a portion thereof having at least 30mm width, in a side region from an end of a belt to a bead portion, is larger by at least 0.2mm than the sum of thicknesses of the auxiliary layers (F) at a portion thereof corresponding to the belt.

According to the present invention, there can be provided: a film applicable to an inner liner for tire, which film has excellent gas barrier properties and bending resistance, allows weight of a tire to be reduced with improving internal pressure retainability of the tire at both the brand-new stage and the used stage thereof, and is capable of demonstrating good gas barrier properties without breaking especially in a running condition at a relatively low temperature in winter time or the like; an inner liner for tire, using the film; and a tire provided with the inner liner for tire.

Brief Description of the Drawings

FIG. 1 is a partial sectional view of one example of a pneumatic tire of the present invention.
FIG. 2 is a partially enlarged sectional view of the one example of a pneumatic tire of the present invention.
FIG. 3 is a partially enlarged sectional view of another example of a pneumatic tire of the present invention.
FIG. 4 is a partial sectional view of yet another example of a pneumatic tire of the present invention.
FIG. 5 is a schematic view showing one example of an embodiment of a preferable screw structure of an extruder for use in the present invention.

Best Mode for implementing the Invention

The present invention will be described in detail hereinafter. The film of the present invention can be suitably used for an inner liner for tire and includes at least a layer composed of resin composition (D) produced by dispersing viscoelastic substance (C) in a resin containing modified ethylene-vinyl alcohol copolymer (B) obtained by subjecting ethylene-vinyl alcohol copolymer (A) to a reaction, wherein 100% modulus at -30°C of the viscoelastic substance (C) is smaller than 6MPa. By using as an inner liner the composition (D) produced by dispersing the viscoelastic substance (C) in a resin containing the modified ethylene-vinyl alcohol copolymer (B) obtained by subjecting the ethylene-vinyl alcohol copolymer (A) to a reaction, as described above, it is possible to provide a film applicable to an inner liner, which film has excellent gas barrier properties and bending resistance, allows weight of a tire to be reduced with improving internal pressure retainability of the tire at both the brand-new stage and the used stage thereof, and is capable of demonstrating good gas barrier properties without breaking especially in a running condition at a relatively low temperature in winter time or the like. In a case where M100 (100% modulus) at -30°C of the viscoelastic substance (C) is 6MPa or larger, it is impossible to prevent cracks from being generated in matrix resin due to a relatively large strain caused when a tire runs over a projection. The film of the present invention is applicable to products other than an inner liner for tire.

The film of the present invention preferably includes at least a layer composed of resin composition (D) produced by dispersing viscoelastic substance (C), of which Young's modulus at -30°C is smaller than that of the modified ethylene-vinyl alcohol copolymer (B), in a resin containing the modified ethylene-vinyl alcohol copolymer (B). The modified ethylene-vinyl alcohol copolymer (B) obtained, for example, by reacting an epoxy compound (E) with the ethylene-vinyl alcohol copolymer (A) has lower modulus of elasticity than ordinary EVOH. Further, modulus of elasticity of the resin can be further lowered by dispersing the viscoelastic substance (C) satisfying the aforementioned physical properties therein. Accordingly, modulus of elasticity of the resin composition (D) produced by dispersing the viscoelastic substance (C) in a resin containing the modified ethylene-vinyl alcohol copolymer (B) significantly decreases, whereby fracture resistance during bending of a tire increases and generation of cracks is suppressed.

Further, crystallinity of the ethylene-vinyl alcohol copolymer (A) can be decreased and the copolymer can be softened by modifying the ethylene-vinyl alcohol copolymer (A) such that a hydroxyl group thereof realizing crystallinity is changed to a chemical structure as shown in formula (I) below.

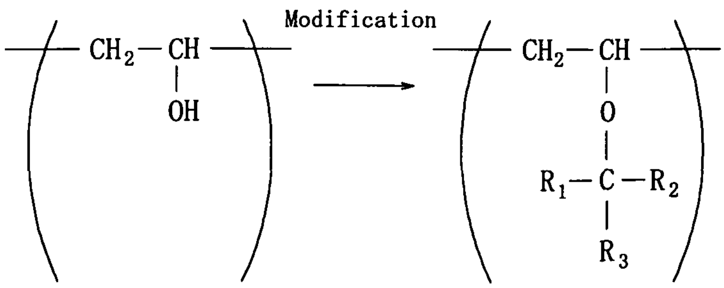

(I)

In formula (1), $R_1$, $R_2$, and $R_3$ each include one of C, H and O.

In the film of the present invention, the viscoelastic substance (C) preferably contains one of diene-based rubber or non-diene rubber. In a case where the viscoelastic substance (C) contains one of diene-based rubber or non-diene rubber, the resin composition (D) can be sufficiently elastic in a relatively wide range of temperature, whereby fatigue resistance of the film (inner liner) can be enhanced.

Examples of the main chain skeleton of the viscoelastic substance (C) include butadiene rubber (BR), styrene-butadiene copolymer rubber (SBR), hydrogenated SBR, natural rubber (NR), butyl rubber (IIR), chlorosulfonated polyethylene rubber (CSM), ethylene-propylene rubber (EPM, EPDM), ethylene-butene rubber, ethylene-octene rubber, chloroprene rubber (CR), acrylic rubber (ACM), silicone rubber, modified natural rubber having a functional group at a portion thereof, nitrile rubber (NBR), and an elastic substance including halogen group (e.g. bromobutyl rubber (Br-IIR), chlorobutyl rubber (Cl-IIR), and bromoisobutylene-p-methylstyrene shown in formula (III) below).

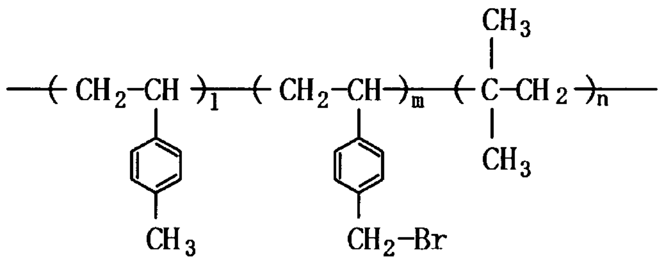

(II)

Further, in the film of the present invention, the vicoelastic substance (C) preferably has a functional group which either exhibits relatively high affinity for hydroxyl group or is reacted to bond a molecule of the modified ethylene-vinyl alcohol copolymer (B) to a molecule of the viscoelastic substance (C). Variation in diameter of particles of the viscoelastic substance (C), as well as the average particle diameter thereof, dispersed in the modified ethylene-vinyl alcohol copolymer (B) can be made small by using the vicoelastic substance (C) having a functional group which exhibits relatively high affinity for hydroxyl group. In the present embodiment, examples of the functional group having relatively high affinity for hydroxyl group include functional groups each modified by at least one type of compound selected from the group consisting of boron-containing group, maleic acid, maleic anhydride, hydroxyl group, carboxyl group, isocyanate group, isothiacyanate group, epoxy group, amine, and alkoxysilane and introduced to the viscoelastic substance (C).

The functional group is not limited to those capable of being directly reacted with the modified ethylene-vinyl alcohol copolymer (B) or those by themselves having relatively high affinity for hydroxyl group, and examples of the functional group also include those capable of being reacted with the modified ethylene-vinyl alcohol copolymer (B) by subjecting each of them to a preliminary reaction with other chemicals (e.g. Example 13). The functional group may be either provided in polymerization of polymers or a postpolymerization treatment of the viscoelastic substance (C), or introduced by a reaction of the modified ethylene-vinyl alcohol copolymer (B) with another low-molecular weight compound during/immediately before blending the modified ethylene-vinyl alcohol copolymer (B) with the resin composition (D).

Examples of the boron-containing group include at least one type of functional group selected from the group consisting of boron-containing groups which can be converted into boronic acid group under the presence of boronic acid or water. A boronic acid group among the boron-containing group is shown in formula (III) below.

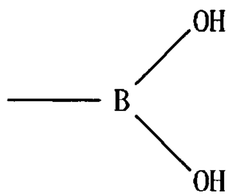

(III)

Further, the "boron-containing group which can be converted into boronic acid group under the presence of water" represents a boron-containing group which can be converted into a boronic acid group shown in formula (III) as a result of hydrolysis under the presence of water. More specifically, the "boron-containing group which can be converted into boronic acid group under the presence of water" represents a functional group which can be converted into a boronic acid group when the functional group is hydrolyzed for 10 minutes to 2 hours in a condition of the room temperature to 150°C by using as a solvent one of: only water; a mixture of water and an organic solvent (such as toluene, xylene, acetone); a mixture of 5% aqueous boric acid and the aforementioned organic solvent. Representative examples of such a functional group as described above include boronic acid ester shown in formula (IV) below, boronic acid anhydride group shown in formula (V) below, boronic acid salt group shown in formula (VI) below,

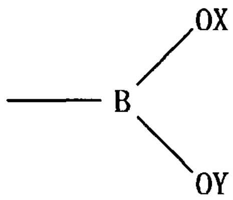

(IV)

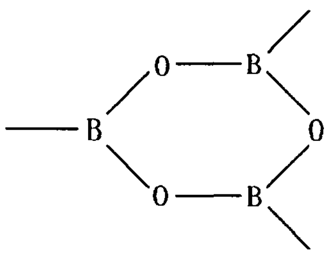

(V)

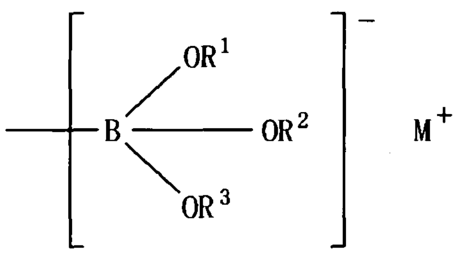

(VI)

In the formula shown above, X and Y each represent hydrogen atom, aliphatic hydrocarbon group ($C_1$-$C_{20}$ normal or branched alkyl group, alkenyl group or the like), cycloaliphatic hydrocarbon group (cycloalkyl group, cycloalkenyl group or the like), aromatic hydrocarbon group (phenyl group, biphenyl group X and Y may represent the same group or be different from each other. However, a case where X and Y are both hydrogen atoms is excluded. X and Y may be bonded to each other. $R^1$, $R^2$ and $R^3$ each represent, as is the case with X and Y, hydrogen atom, aliphatic hydrocarbon group, cycloaliphatic hydrocarbon group, or aromatic hydrocarbon group. $R^1$, $R^2$ and $R^3$ may represent the same group or be different from each other. M represents an alkali metal. The aforementioned X, Y, $R^1$, $R^2$ and $R^3$ may include another group, e.g. hydroxyl group, carboxyl group, halogen atom and the like.

Specific examples of the boronic acid ester group shown in formula (IV) include boronic acid dimethyl ester group, boronic acid diethyl ester group, boronic acid dibutyl ester group, boronic acid dicyclohexyl ester group, boronic acid ethylene glycol ester group, boronic acid propylene glycol ester group, boronic acid 1,3-propanediol ester group, boronic acid 1,3-butanediol ester group, boronic acid neopentyl glycol ester group, boronic acid cathecol ester group, boronic acid glycerin ester group, boronic acid trimethylolethane ester group, boronic acid trimethylolpropane ester group, boronic acid diethanolamine ester group, and the like.

Examples of the boronic acid salt group shown in formula (VI) include the group of alkali metal salt of boronic acid, and specific examples thereof include boronic acid sodium salt group, boronic acid potassium salt group and the like.

Among the boron-containing group described above, cyclic boronic acid ester group is preferable in terms of thermal stability. Examples of the cyclic boronic acid ester group include a cyclic boronic acid ester group having a 5-member or 6-member ring, and specific examples thereof include boronic acid ethylene glycol ester, boronic acid propylene glycol ester, boronic acid 1,3-propanediol ester group, boronic acid 1,3-butanediol ester group, boronic acid glycerin ester group, and the like.

In the film of the present invention, it is preferable that the polymer material constituting the viscoelastic substance (C) has a random molecular structure, does not include a block or segment where Tm (the melting point) or Tg (the glass transition point) is 50°C or higher and, if the polymer material includes such a block or segment, only by a relatively small amount. If the viscoelastic substance (C) includes, for example, a relatively large amount of blocks or segment of styrene, since the styrene layer is in a glass state and very hard around the room temperature, the resin composition (D) loses softness thereof. However, even in a case where the viscoelastic substance (C) contains styrene, if the molecular structure of the substance is random, softness of the resin composition (D) is ensured. In the present embodiment, Tg is obtained by differential scanning calorimetry (DSC).

The polymer material constituting the viscoelastic substance (C) may include a small amount of block component within a range which does not harm the physical properties of the material in order to retain a pellet-like shape. For example, in a case where the polymer material constituting the viscoelastic substance (C) is styrene-ethylene-butylene-styrene copolymer, the content of polystyrene in the copolymer is preferably not larger than 19% and more preferably not larger than 16%.

In the present invention, a method of producing the modified ethylene-vinyl alcohol copolymer (B) is not particularly restricted and preferable examples thereof include a production method of reacting 1 to 50 parts by mass of the epoxy compound (E) with 100 parts by mass of the ethylene-vinyl alcohol copolymer (A). More specifically, the epoxy compound (E) is added to a solution of an ethylene-vinyl alcohol copolymer under the presence of acid catalyst or alkali catalyst (preferably acid catalyst) and the mixed components are allowed to be reacted with each other to produce a modified ethylene-vinyl alcohol copolymer. Examples of a reaction solvent include non-protonic polar solvent such as dimethyl sulfoxide, dimethyl formamide, dimethyl acetoamide and N-methylpyrrolidon. Examples of the acid catalyst include p-toluene sulfonic acid, methane sulfonic acid, trifluoromethanesulfonic acid, sulfuric acid, and boron trifluoride. Examples of the alkali catalyst include sodium hydroxide, potassium hydroxide, lithium hydroxide, sodium methoxide, and the like. The content of the catalys is preferably in the range of 0.0001 to 10 parts by mass with respect to 100 part by mass of the ethylene-vinyl alcohol copolymer.

Monovalent epoxy compound is preferable as the epoxy compound (E). Polyvalent epoxy compound may be cross-lined with the ethylene-vinyl alcohol copolymer, possibly resulting in generation of gel, gel-like minute particles, and the like and deterioration of the quality of the inner liner. The epoxy compound (E) is preferably a monovalent epoxy compound having molecular weight of 500 or less and more preferably glycidol or epoxypropane in terms of facilitating production of the modified ethylene-vinyl alcohol copolymer and achieving good gas barrier properties, bending resistance and fatigue resistance. Preferably 1 to 50 parts by mass, more preferably 2 to 40 parts by mass, and further more preferably 5 to 35 parts by mass of the epoxy compound (E) is reacted with 100 parts by mass of the ethylene-vinyl alcohol copolymer (A).

The melt flow rate (MFR) of the ethylene-vinyl alcohol copolymer (A) is preferably 0.1 to 30 g/10 min., more preferably 0.3 to 25 g/10 min., and further more preferably 0.5 to 20 g/10 min. at 190°C under the load of 2160g in terms of achieving good gas barrier properties, bending resistance and fatigue resistance.

Further, the saponification value of the ethylene-vinyl alcohol copolymer (A) is preferably not smaller than 90%, more preferably not smaller than 95%, and further more preferably not smaller than 99%. In a case where the saponificartion value is smaller than 90%, gas barrier properties and thermal stability during molding of the inner liner may be unsatisfactory.

The ethylene content of ethylene-vinyl alcohol copolymer (A) is preferably in the range of 25 to 50 mol %, more preferably in the range of 30-48 mol %, and further more preferably in the range of 35 to 45 mol %. In a case where the ethylene content is less than 25 mol %, bending resistance, fatigue resitance and melt-moldability of the inner liner may deteriorate. In a case where the ethylene content exceeds 50 mol %, satisfactory gas barrier properties may not be sufficiently ensured.

Young's modulus at -30°C of the resin composition (D) is preferably not larger than 1500 MPa. In a case where Young's modulus at -30°C of the resin composition (D) is not larger than 1500 MPa, durability of an inner liner when it is used in a cold area can be improved.

The content of the viscoelastic substance (C) in the resin composition (D) is preferably in the range of 10 to 80 mass %, more preferably in the range of 20 to 70 mass %, and further more preferably in the range of 40 to 70 mass %. In a case where the content of the viscoelastic substance (C) is less than 10 mass %, an effect of improving bending resistance of an inner liner is not sufficient. In a case where the content of the viscoelastic substance (C) exceeds 80

mass %, gas barrier properties of an inner liner may deteriorate. Further, the average particle diameter of the viscoelastic substance (C) is preferably not larger than 5 μm. In a case where the average particle diameter of the viscoelastic substance (C) exceeds 5 μm, bending resistance of the layer composed of the resin composition (D) may not be sufficiently improved, which could result in deterioration of gas barrier properties of an inner liner and thus deterioration of internal pressure retainability of a tire. The average particle diameter of the viscoelastic substance (C) in the resin composition (D) is obtained, for example, by freezing a sample of the resin composition (D), cutting a slice from the sample by a microtome and observing the slice by a transmission electronic microscope (TEM).

The resin composition (D) can be prepared by blending the ethylene-vinyl alcohol copolymer (A) and the viscoelastic substance (C). The resin composition (D) is molded to a film, a sheet or the like at a melting temperature preferably in the range of 120 to 270 °C by melt molding, preferably extrusion molding such as T-die molding and inflation molding, and used as an inner liner.

The layer composed of the resin composition (D) is preferably cross-linked so as to have improved heat resistance during a molding process such as vulcanization of a tire. In a case where the layer composed of the resin composition (D) is not cross-linked, an inner liner is significantly deformed to be uneven during the vulcanization process of a tire, whereby gas barrier properties, bending resistance and fatigue resistance of the inner liner may deteriorate. In the present embodiment, irradiation of energy ray is preferable as the crosslinking method. Examples of the energy ray include ionizing radiation such as ultraviolet, electron beam, X ray, α ray, γ ray and the like. Electron beam is particularly preferable among these examples. Accordingly, the resin and the viscoelastic substance of electron beam-crosslinking type is preferable for use. A resin and a viscoelastic substance of the type which is decomposed by irradiation of electron beam will exhibit poor durability. Irradiation of electron beam is preferably carried out after the resin composition (D) is processed to a molded body such as film, a sheet or the like. Exposed dose of electron beam is preferably in the range of 2.5 to 60 Mrad and more preferably in the range of 5 to 50 Mrad. In a case where exposed dose of electron beam is less than 2.5 Mrad, crosslinking hardly proceeds. In a case where exposed dose of electron beam exceeds 60 Mrad, the resulting molded body quickly deteriorates. Further, in the case where exposed dose of electron beam exceeds 60 Mrad, the molded body is too hard and may easily break.

The oxygen permeability of the layer composed of the resin composition (D) at 20°C and 65% RH is preferably not larger than $3.0 \times 10^{-12}$ $cm^3$ $cm/cm^2$ · sec · cm Hg, more preferably not larger than $1.0 \times 10^{-12}$ $cm^3$ · $cm/cm^2$ · sec · cm Hg, and further more preferably not larger than $3.0 \times 10^{-13}$ $cm^3$ · $cm/cm^2$ · sec · cm Hg. In a case where the oxygen permeability of the layer composed of the resin composition (D) at 20°C and 65% RH exceeds $3.0 \times 10^{-12}$ $cm^3$ · $cm/cm^2$ · sec · cm Hg, the layer composed of the resin composition (D) must be thickened to enhance internal pressure retainability of a tire when the film is used as an inner liner of the tire, whereby the weight of the tire cannot be sufficiently reduced.

Further, thickness of each layer composed of the resin composition (D) is preferably in the range of 0.1 to 500 μm (0.1μm and 500μm are inclusive), more preferably in the range of 0.5 to 100 μm, and further more preferably in the range of 1 to 70 μm. In a case where thickness of each layer composed of the resin composition (D) exceeds 500 μm, when the film is used for an inner liner, an effect of reducing weight is no longer conspicuous, as compared with the conventional inner liner using butyl based rubber; bending resistance and fatigue resistance deteriorate such that fractures and cracks are easily generated due to bending deformation during use of the film; and gas barrier properties of the film may deteriorate, as compared with the state prior to use of the film, because of easy growth of cracks in the film. In a case where the thickness is smaller than 0.1 μm, gas barrier properties are insufficient and internal pressure retainability of a tire may not be sufficiently ensured.

The film of the present invention preferably further includes at least one auxiliary layer (F) composed of elastomer and adjacent to the layer composed of the resin composition (D). In the present embodiment, using for the auxiliary layer (F) an elastomer having relatively high affinity for hydroxyl group of the ethylene-vinyl alcohol copolymer (A) is preferable because then the auxiliary layer (F) is less likely to come off from the resin composition (D). Further, use of such an elastomer having high affinity for hydroxyl group of the ethylene-vinyl alcohol copolymer (A) as described above suppresses growth of cracks if fractures and/or cracks are generated in the layer composed of the resin composition (D), whereby a problem such as a large fracture and a large crack is less likely to occur and good internal pressure retainability of a tire can be sufficiently maintained. Yet further, in the film of the present invention, the auxiliary layer (F) functions as cushion and alleviates input of strain to the resin composition (D), thereby improving crack resistance of the inner liner of the present invention, when at least one auxiliary layer (F) having better softness or creep resistance than the resin composition (D) are provided in a laminated manner.

In the film of the present invention, preferable examples of the elastomer for use in the auxiliary layer (F) include polyolefin, butyl-based elastomer, diene-based elastmer and urethane-based elastomer. Since the auxiliary layer of the film of the present invention is composed of olefin-based elastomer, butyl-based elastomer, diene-based elastmer, a hydrogenated derivative of diene-based elastomer, or urethane-based elastomer, the auxiliary layer is softer or has better creep resistance than the layer composed of the resin composition (the barrier layer), whereby the auxiliary layer functions as cushion, input of strain to the resin composition (D) can be alleviated and crack resistance of the film is enhanced.

In the film of the present invention, in a case where at least one layer composed of the resin composition (D) and a plurality of the auxiliary layers (F) are provide in a laminated manner, it is preferable that the resin composition (D) layer is interposed between the auxiliary layers (F). Preferable examples of the laminated layer structure include (F)/(D)/(F), (F)/(D)/(F)/(D)/(F), and (F)/(D)/(F)/(D)/(F)/(D)/(F). The lamination of the layers can be carried out by co-extrusion such as T-die molding, inflation molding and the like. In the present embodiment, it is especially preferable to provide multi-layered auxiliary layers each made of elastomer(s) which can be laminated and having various characteristics. Regarding the elastomer, a single type of elastomer may be solely used or two or more types of elastomers may be used in combination.

In the film of the present invention, at least one adhesive layer (G) may be provided at at least one of: between the layer composed of the resin composition (D) and the auxiliary layer (F); and between one auxiliary layer (F) and another auxiliary layer (F) having the same or different composition as/from the one auxiliary layer. Specifically, an adhesive layer (G) can be provided either between the layer composed of the resin composition (D) and the auxiliary layer (F) adjacent thereto or between two adjacent auxiliary layers of the multilayered auxiliary layers. Examples of an adhesive for use in the adhesive layer (G) include chlorinated rubber-isocyanate based adhesive, modified olefin based adhesive (e.g. an adhesive obtained by modifying butyl rubber, polyethylene, polypropylene, ethylene-propylene, ethylene-butene, ethylene-octene), and modified diene based adhesive.

In a case where the film of the present invention includes the layer composed of the resin composition (D), the auxiliary layer (F) and optionally the adhesive layer (G), examples of the laminated body of the film include (D)/(G), (F)/(D)/(F)/(G), (D)/(G)/(F), (F)/(D)/(F)/(D)/(F). In the present embodiment, examples of the method of producing the laminated body include laminating the layer composed of the resin composition (D) and other layers by co-extrusion such as T-die molding, inflation molding and the like, attaching the layer composed of the resin composition (D) and the auxiliary layer (F) to each other by optionally using the adhesive layer (G), and the like. In a case where the film is used as an inner liner, the layer composed of the resin composition (D) and the auxiliary layer (F) may be attached to each other by optionally using the adhesive layer (G) on a drum in a building process of a tire.

The oxygen permeability of the auxiliary layer (F) at 20°C and 65% RH is preferably not larger than $3.0 \times 10^{-9}$ $cm^3 \cdot cm/cm^2 \cdot sec \cdot cm\ Hg$ and more preferably not larger than $1.0 \times 10^{-9}$ $cm^3\ cm/cm^2 \cdot sec \cdot cm\ Hg$. In the present embodiment, an oxygen permeability coefficient is used as a representative value of gas permeability. In a case where the oxygen permeability of the auxiliary layer (F) at 20°C and 65% RH is not larger than $3.0 \times 10^{-9}$ $cm^3\ cm/cm^2 \cdot sec \cdot cm\ Hg$, when the film is used for an inner liner for tire, an effect of reinforcing gas barrier properties, by the inner liner, is sufficiently demonstrated such that internal pressure retainability of a tire can be maintained at a highly satisfactory level. The oxygen permeability of the aforementioned laminated body at 20°C and 65% RH is preferably not larger than $3.0 \times 10^{-9}$ $cm^3 \cdot cm/cm^2 \cdot sec \cdot cm\ Hg$ and more preferably not larger than $1.0 \times 10^{-9}$ $cm^3 \cdot cm/cm^2 \cdot sec \cdot cm\ Hg$ in terms of achieving good gas barrier properties.

Preferable examples of the elastomer for use in the auxiliary layer (F) include butyl rubber, halogenated butyl rubber, diene-based elastomer, and plastic urethane-based elastomer. Butyl rubber and halogenated butyl rubber are preferable and halogenated butyl rubber is especially preferable in terms of achieving good gas barrier properties. Butyl rubber and diene-based elastomer are preferable in order to suppress growth of cracks generated in the layer composed of the resin composition (D). Further, an elastomer softer or having better creep resistance than the layer composed of the resin composition (D) is preferable and thermoplastic urethane-based elastomer, polyolefin-based elastomer and diene-based elastomer are particularly preferable in order to suppress generation and growth of cracks, while reducing thickness of the auxiliary layer (F).

Specific examples of the diene-based-elastomer described above include natural rubber (NR), isoprene rubber (IR), butadiene rubber (BR), styrene-butadiene copolymer rubber (SBR), acrylonitrile-butadiene rubber (NBR), chloroprene rubber (CR) and the like. Natural rubber, SBR and butadiene rubber are especially preferable among these examples. A single type of the diene-based elastomer may be solely used or two or more types thereof may be used in combination.

In the film of the present invention, the auxiliary film (F) preferably includes thermoplastic urethane-based elastomer. Thermoplastic urethane-based elastomer is obtained by a reaction between polyol, an isocyanate compound and short-chain diol. Polyol and short-chain diol form linear polyurethane as a result of an addition reaction with the isocyanate compound. Polyol constitutes soft portions and the isocyanate compound and shot-chain diol constitute hard portions of the thermoplastic urethane-based elastomer. Characteristics of the thermoplastic urethane-based elastomer can be changed in a wide range by changing types of the raw materials, blending contents and polymerization conditions thereof, and the like.

Regarding the auxiliary layer (F) of the film of the present invention, the auxiliary layer (F1) adjacent to the layer composed of the resin composition (D) and other auxiliary layers (F2) may be composed of different elastomers, respectively. Specifically, the film of the present invention may include a laminated body obtained by laminating a sub-laminated body, constituted of the layer composed of the resin composition (D) and the auxiliary layer (F1) adjacent to the layer composed of the resin composition (D) and containing, e.g. thermoplastic urethane-based elastomer, with the

auxiliary layer (F2) composed of a rubber composition such as butyl-based rubber by way of the adhesive layer (G). Examples of the laminated body include (F 1)/(D)/(F1)/(G)/(F2).

The sum of the thicknesses of the auxiliary layers (F) is preferably in the range of 10 to 2000 μm, more preferably in the range of 15 to 1500 μm, and further more preferably in the range of 20 to 800 μm. In a case where the sum of the thicknesses of the auxiliary layers (F) is less than 10μm, the reinforcing effect by the auxiliary layer is not sufficiently demonstrated, whereby troubles caused by fractures and/cracks generated in the layer composed of the resin composition (D) cannot be well addressed and internal pressure retainability of a tire may not be sufficiently maintained when the film is used for an inner liner for the tire. In a case where the sum of the thicknesses of the auxiliary layers (F) exceeds 2000 μm, an effect of reducing tire weight diminishes.

Tensile stress of the auxiliary layer (F) at 300% extension is preferably not larger than 200 MPa, more preferably not larger than 100 MPa, and further more preferably not larger than 70 MPa. In a case where the tensile strength exceeds 200 MPa, bending resistance and fatigue resistance may deteriorate when the auxiliary layer (F) is used for an inner liner.

The tire of the present invention characteristically includes an inner liner made of the aforementioned film and provided at the tire inner surface on the inner side of a carcarss thereof. Hereinafter, one example of the tire of the present invention will be described in detail with reference to the drawings. FIG. 1 is a partial sectional view of one example of the tire of the present invention. The tire shown in FIG. 1 includes: a pair of bead portions 1; a pair of sidewall portions 2; a tread portion 3 continuously extending from the respective sidewall portions 2; and further a carcass 4 extending in a toroidal shape across the pair of bead portions 1 for reinforcing the respective portions 1, 2, 3; a belt 5 constituted of two belt layers disposed on the outer side in the radial direction of a crown portion of the carcass 4; and an inner liner 6 provided at the tire inner surface on the inner side of the carcass 4.

In the tire exemplarily shown in FIG. 1, the carcass 4 includes a main body extending in a toroidal shape across the pair of bead cores 7 respectively embedded the bead portions 1, and a turn-up portion wound around each bead core 7 from the inner side toward the outer side in the tire widthwise direction and turned up toward the outer side in the radial direction. In the tire of the present invention, the number and structure of plies of the carcass 4 is not restricted to those shown in the drawing.

Although the belt 5 is constituted of two belt layers in the tire exemplarily shown in FIG. 1, the number of belt layers constituting the belt 5 is not restricted to two in the tire of the present invention. Each belt layer normally includes a rubber-coated layer of cords extending inclined with respect to the tire equatorial plane, and two belt layers are laminated such that cords constituting the respective belt layers intersect each other symmetrical with respect to the tire equatorial plane, thereby forming the belt 5. Further, although the tire exemplarily shown in FIG. 1 includes a belt reinforcing layer 8 disposed on the outer side in the tire radial direction of the belt 5 to cover the belt 5 entirely, the tire of the present invention may omit the belt reinforcing layer 8 or replace the bet reinforcing layer 8 with another belt reinforcing layer of different structure. In the present embodiment, the belt reinforcing layer 8 normally includes a rubber layer of cords arranged substantially in parallel with the tire circumferential direction.

Yet further, although the inner liner 6 includes only a single layer composed of the resin composition (D) in the tire exemplarily shown in FIG. 1, the tire of the present invention may further include at least one auxiliary layer (F) as shown in FIG. 2 and FIG. 3 to enhance bending resistance of the layer composed of the resin composition (D).

FIG. 2 and FIG. 3 are partially enlarged sectional views of other examples of the tire of the present invention, respectively, showing the portion II indicated by a circle in FIG. 1. A tire shown in FIG. 2 includes, in place of the inner liner 6 shown in FIG. 1, an inner liner 13 constituted of a layer 9 composed of the resin composition (D), two auxiliary layers (F) 10, 11 disposed adjacent to the layer 9 composed of the resin composition (D), and an adhesive layer (G) 12 disposed on the outer side of the auxiliary layer 11. A tire shown in FIG. 3 includes an inner liner 15, which is substantially the same as the inner line 13, except that the inner liner 15 is further provided with an auxiliary layer (F) 14 on the outer side of the adhesive layer (G) 12 of FIG. 2. Although the tires shown in FIG. 2 and FIG. 3 each include one adhesive layer (G) 12 on the outer side of the reinforcing layer (F) 11, the tire of the present invention may omit the adhesive layer (G) 12 or include at least one adhesive layer (G) at a location other than the outer side of the reinforcing layer (F) 11.

In the tire of the present invention, as shown in FIG. 4, the sum of thicknesses of the auxiliary layers (F) at any position in a portion having at least 30mm width in a side region ranging from an end of a belt to the bead portion (e.g. the portion indicated as "c" in FIG. 4) is preferably larger by at least 0.2mm than the sum of thicknesses of the auxiliary layers at any position in a portion of the auxiliary layer (F) corresponding to a region where the belt 5 exists (i.e. the portion indicated as "a" in FIG. 4). Such a design of the auxiliary layer (F) as described above is preferable because the side region ranging from an end of a belt to the bead portion is a region where strains are most severe and cracks are likely to be generated, whereby thickening the auxiliary layer (F) in the specific region is effective in order to enhance durability of the region. The aforementioned "portion having at least 30mm width" may be any portion within the region indicated as "b" in FIG. 4, as long as the width of the portion along the carcass is 30mm or larger.

The tire of the present invention can be produced according to the conventional method by applying the aforementioned resin composition (D) and optionally the auxiliary layer (F) and the adhesive layer (G) to an inner liner. In the

tire of the present invention, ambient air or air of which oxygen partial pressure has been changed, or an inert gas such as nitrogen, can be used as a gas to be filled in the tire.

The structure of the tire of the present invention is not particularly restricted and can be modified in various manners as long as the tire includes an inner liner using the film designed as described above of the present invention. The tire of the present invention can be suitably applied to tires for passenger vehicle, large tires, off-the-road tires, tires for automobile, tires for motorcycle, tires for airplane, tires for agricultural vehicle, and the like. The tire of the present invention may be either a pneumatic tire or a solid tire. In a case of a pneumatic tire, the tire is inflated by air, nitrogen, helium or the like, and most commonly by air in terms of cost.

[Examples]

The present invention will be described further in detail by Examples hereinafter. The present invention is not subjected to any restriction by these Examples.

(Synthesis Example 1 of modified ethylene-vinyl alcohol copolymer)

2 parts by mass of ethylene-vinyl alcohol copolymer having ethylene content: 44% and saponification value: 99.9% (MFR: 5.5g/10 minutes at 190 °C under the load of 2160g) and 8 parts by mass of N-methyl-2-pyrrolidone are charged in a pressure reaction tank, and the mixture is heated and stirred at 120°C for 2 hours, so that the ethylene-vinyl alcohol copolymer is completely dissolved. 0.4 parts by mass of epoxypropane as the epoxy compound (E) is then added to the mixture and the resulting reaction mixture is heated at 160°C for 4 hours. After the heating is completed, the mixture is put into 100 parts by mass of distilled water for precipitation. The resulting precipitates is thoroughly washed with a large amount of distilled water to wash offN-methyl-2-pyrrolidone and unreacted epoxypropane, whereby modified ethylene-vinyl alcohol copolymer is obtained. The modified ethylene-vinyl alcohol copolymer thus obtained is pulverized by a pulverizer into particles having particle diameter of 2mm or so and then thoroughly washed again by a large amount of distilled water. The particles thus washed are vacuum-dried at the room temperature for 8 hours and then melted and pelletized at 200°C by using a two-shaft extruder. Young's modulus at 23°C of the modified ethylene-vinyl alcohol copolymer thus obtained, measured by the method described below, is 1300 MPa.

(Synthesis Example 2 of modified ethylene-vinyl alcohol copolymer)

Screw structures, vents and pressure (hydroforming) inputs are arranged as shown in FIG. 5 by using "TEM-35BS" extruder (37mmφ, L/D = 52.5, manufactured by Toshiba Machine Co., Ltd.). The extruder is operated at the screw rotation number 400 rpm in a state where barrel C 1 is water-cooled and barrels C2-C3 and barrels C4-C 15 are heated at 200°C and 240°C, respectively. EVOH is fed from a resin feed inlet of C1 at a rate of 15kg/hr. After the fed EVOH is melted, water and oxygen are removed from Vent 1 and glycidol is fed from a hydroforming inlet of C9 at a rate of 2.5kg/hr (the feeding pressure: 6MPa), whereby glycidol-modified EVOH is obtained.

(Synthesis Example 3 of modified viscoelastic substance (succinic anhydride-modified SBR))

300g of cyclohexane, 41.25g of 1,3-butadiene, 8.75g of styrene, 0.38 mmol of ditetrahydrofurylpropane are charged in a 800mml pressure glass vessel dried at reflux under nitrogen, and 0.43mmol of n-butyllithium (BuLi) is added thereto. Polymerization is then carried out at 50°C for 1.5 hours. Thereafter, 0.43mmol of 3-(triethoxysilyl)propyl succnic anhydride as a terminal modifier is added to the reaction mixture and a modification reaction is allowed to proceed for 30 minutes. 0.5mml of 5 mass % solution of 2,6-di-t-butyl-p-cresol (BHT) in isopropanol is then added to the polymerization system to stop the reaction and the reaction mixture is dried by the conventional method, whereby succinic anhydride-modified SBR is obtained.

(Synthesis Example 4 of modified viscoelastic substance (isocyanate - modified BR))

2,000g of cyclohexane, 500g of butadiene, and 10g of tetrahydrofuran are charged in a reaction vessel at reflux under nitrogen, n-butyllithium is added thereto, and polymerization reaction is allowed to proceed at a temperature in the range of 30 to 90°C in an insulated environment. After the polymerization conversion rate has reached 100%, 2 equivalents of diphenylmethane diisocyanate per lithium atom is added and reacted with the mixture. Thereafter, 2,6-di-tert-butyl-p-cresol is added to the reaction mixture and cyclohexane is removed by heating, whereby isocyanate-modified SBR is obtained.

(Synthesis Example 5 of modified viscoelastic substance (isocyanate - modified SBR))

2,000g of cyclohexane, 450g of 1,3-butadiene, 50g of styrene, and 25g of tetrahydrofuran are charged in a reaction vessel at reflux under nitrogen, 0.32g of n-butyllithium is added thereto, and polymerization reaction is allowed to proceed at a temperature in the range of 30 to 90°C in an insulated environment. After the polymerization conversion rate has reached 100%, diphenylmethane diisocyanate of 2 equivalents with respect to n-butyllithium is added and reacted with the mixture. Further, 0.7g (per 100g of rubber) of di-tert-butyl-p-cresol as an anti-aging agent is added. Then, the solvent is removed and the mixture is dried by the conventional method.

(Synthesis Example 6 of modified ethylene-vinyl alcohol copolymer)

A modified ethylene-vinyl alcohol copolymer is obtained in a manner similar to that of Synthesis Example 1, except that the content of ethylene is 32 mol%. The modified ethylene-vinyl alcohol copolymer thus obtained is pulverized by a pulverizer into particles having particle diameter of 2mm or so and the particles are thoroughly washed again with a large amount of distilled water. The particles thus washed are vacuum-dried at the room temperature for 8 hours and then melted and pelletized at 200°C by using a two-shaft extruder.

(Method of measuring Young's modulus at -30°C)

A single-layered film having 20μm thickness is prepared by producing a film under the extruding conditions described below by a two-shaft extruder manufactured by Toyo Seiki Seisaku-sho, Ltd. Next, a short strip-shaped test piece of 15mm width is prepared from the film and the test piece is left indoor for one week under a condition of temperature -36°C (kept constant) and 50% RH. Thereafter, S-S curve (stress-strain curve) at -30°C and 50% RH is measured under the condition of chuck interval: 50mm and tensile speed: 50mm by using Autograph [AG-A500 type] manufactured by Shimadzu Corporation, and Young's modulus is obtained from the initial tangent of the S-S curve.

Screw: 20mmφ, Full flight
Temperature setting of cylinder and die: C1/C2/C3/Die = 200/200/200/200 (°C)

(Method of measuring oxygen permeability)

The moisture of the film described above is adjusted for 5 days at 20°C and 65%RH. Oxygen permeability values of two sheets of the film of which moisture has been thus adjusted are measured under a condition of 20°C and 65%RH according to JIS K7126 (isobaric method) by using "MOCON OX-TRAN 2/20 type" manufactured by Modern Control. Inc. The average of the two oxygen permeability values is then obtained.

(Method of evaluating internal pressure retainability)

A tire is produced by the method described below, inflated to an internal pressure of 140kPa, and made to run 10,000 km at -30°C in a state where the tire is pushed against a rotating drum corresponding to a running speed of 80km/h under the load of 6kN. The tire which has been subjected to running as described above (the test tire) and a tire which has not been used are mounted to 6JJ×15 rims and the internal pressures of these tires are adjusted to 240kPa, respectively. The tires are then left for three months. The internal pressure of each of the tires after three months is measured, and internal pressure retainability of the test tire is evaluated by using a formula below:

$$\text{Internal pressure retainability} = ((240 - b)/(240 - a)) \times 100$$

In the formula, "a" represents the internal pressure of the test tire after three months, "b" represents the internal pressure of the unused tire of Comparative Example 1 (a pneumatic tire using the conventional rubber inner liner) after three months. Values of the test tires are expressed as index values relative to the value of Comp. Example 1 being 100, in evaluation.

(Method of evaluating dispersibility of the viscoelastic substance (C) in the resin composition (D))

A slice is obtained by cutting a frozen sample by a microtome. The slice is observed by using a transmission electron microscope (TEM), and a sample state in which the average particle diameter of the viscoelastic substance is

10μm or larger or the viscoelastic substance is not dispered is evaluated as "Poor", while a sample state in which the average particle diameter of the viscoelastic substance is not larger than 10μm and the viscoelastic substance is well dispered is evaluated as "Good".

(Method of evaluating presence/absence of cracks)

Regarding presence/absence of cracks generated in the inner liner, presence/absence of cracks is evaluated by visually observing the appearance of the inner liner of the tire which has been subjected to running on the drum. The results of the evaluations are shown in Tables 1 to 3.

(Preparation of films and pneumatic tires of Examples 1 to 15 and Comparative Examples 1 to 3)

The modified ethylene-vinyl alcohol copolymer obtained by either Synthesis Example 1 or Synthesis Example 2, or the succinic anhydride-modified SBR obtained by Synthesis Example 3, was each blended with the viscoelastic substances (C) as shown in Tables 1-3 by a two-shaft extruder, whereby the resin compositions (D) having blending protocols shown in Tables 1 to 3 are obtained. Nylon ("Ubenylon 5033B" manufactured by Ube Industries, Ltd.) was used as the resin composition in Comparative Example 3.

Regarding the viscoelastic substance (C): "EPOXYPRENE 25" manufactured by Mu-ang Mai Guthrie Public Co., Ltd., was used as epoxy-modified natural rubber (E-NR) (Polymer 1); "Taftec M1943" manufactured by Asahi Chemical Industry Co., Ltd. was used as maleic anhydride-modified styrene-ethylene-butyrene-styrene (SEBS) (Polymer 2); "Exxpro89-4" manufactured by ExxonMobil Chemical was used as bromoisobutylene-p-methylstyrene (Polymer 3); "TAFMER MP0620" manufactured by Mitsui Chemicals, Inc. was used as modified polyethylene (modified EP) (Polymer 4); "TAFMER MH7020" manufactured by Mitsui Chemicals, Inc. was used as modified polyolefin copolymer (modified EB) (Polymer 5); "1050S" manufactured by JSR Corporation was used as unmodified polyolefin copolymer (unmodified EB) (Polymer 6); "Dynalon 8630P" manufactured by JSR Corporation was used as modified olefin in Example 14 (Polymer 7); blend of "Dynalon 8630P" (Polymer 7) and "Dynalon 4630P" (Polymer 8) each manufactured by JSR Corporation was used as modified olefin in Example 15; and "Tafden 2000R" manufactured by Asahi Chemicals Industry Co., Ltd. was used as unmodified SBR (Polymer 9).

"EPICLON 430" manufactured by DIC Corporation was used as glycidylamine (Compound 1, tetraglycidylamine, DDM).

Those synthesized in Synthesis Examples 3 to 5 described above were used as succinic anhydride-modified SBR, isocyanate-modified BR, and isocyanate-modified SBR, respectively. Further, Young's modulus at -30°C of the resin composition (D) was measured by using the Young's modulus measuring method described above. Yet further, 100% modulus of the viscoelastic substance was measured according to JIS K6251-1993 by using JIS No. 3 dumbbell-shape test piece. The results are shown in Tables 1 to 3.

Next, three-layered films of Examples 1, 2, 7 to 11 and 15 (thermoplastic polyurethane layer/resin composition (D) layer/thermoplastic polyurethane layer) were prepared by a two-type-three-layer coextruder by using the resin compositions (D) thus obtained and thermoplastic polyurethane (TPU) ("Kuramilon 3190" manufactured by Kuraray Co., Ltd.) under the coextrusion molding conditions described below. Thicknesses of the respective layers used in each film are shown in Tables 1 to 3. In Examples and Comp. Examples other than Examples 1, 2, 7-11,15 and Comp. Example 1, each film was structured as a single-layer film of the resin composition (D).

Next, each of the films of Examples 1 to 15 and Comp. Example 2 was irradiated with electron beam for crosslinking under a condition of acceleration voltage: 200kV and irradiation energy: 30Mrad by using "Curetron for industrial production EBC200-100" as an electron beam irradiation device manufactured by NHV Corporation. In Examples 1 and 7, "Metalock R30M" manufactured by Toyo Kagaku Laboratory was coated as the adhesive layer (G) on one surface of the crosslinked film thus obtained and then the film was attached to the inner surface of the auxiliary layer (F) of 500μm thickness to prepare an inner liner. Similarly, regarding Comp. Example 2, "Metalock R30M" manufactured by Toyo Kagaku Laboratory was coated as the adhesive layer (G) on one surface of the film and then the film was attached to the inner surface of the auxiliary layer (F) of 500μm thickness to prepare an inner liner.

A pneumatic tire of size: 195/65R15 for passenger car, having the structure as shown in FIG. 1, was prepared according to the conventional method by using each of the inner liners thus obtained. The compositions and the like of the films used in the inner liners are shown in Tables 1 to 3.

As the auxiliary layer (F), there was used a rubber composition prepared by blending 60 parts by mass of GPF carbon black ("#55" manufactured by Asahi Carbon Co., Ltd., 7 parts by mass of "SUNPAR 2280" manufactured by Japan Sun Oil Company, Ltd., 1 parts by mass of stearic acid (manufactured by ADEKA Corporation), 1.3 parts by mass of "NOCCELER DM" manufactured by Ouchi Shinko Chemical Industrial Co., Ltd., 3 parts by mass of zinc oxide (manufactured by Hakusuitech Ltd.), and 0.5 parts by mass of sulfur (manufactured by Karuizawa Refinery Co., Ltd.) with respect to 30 parts by mass of natural rubber and 70 parts by mass of bromobutyl rubber ("Bromobutyl 2244" manufactured

by JSR Corporation). The rubber composition used for the auxiliary layer (F) exhibited tensile stress at 300% extension: 6.5 MPa and oxygen permeability: $6.0 \times 10^{-10}$ $cm^3 \cdot cm/cm^2 \cdot sec \cdot cm$ Hg. The tensile stress at 300% extension was measured according to JIS K6251-1993 and oxygen permeability was measured by the method described above.

A pneumatic tire of Comparative Example 1 was produced in the same manner as described above, except that the film of the present invention was not used and the thickness of the auxiliary layer (F) was 1500μm.

The extrusion conditions of the respective resins are as follows.

Extrusion temperature of respective resins: C1/C2/C3/Die = 170/170/200/200 °C Specification of the extruder for respective resins:

- Thermoplastic polyurethane: 25mm φ extruder "P25-18AC" manufactured by Osaka Seiki Kosaku Co., Ltd.
- Resin composition (D): 20mmφ extruder "laboratory machine ME model CO-EXT" manufactured by Toyo Seiki Co., Ltd.

Specification of T-Die: 500mm width for two-type-three-layer, manufactured by PLABOR Research Laboratory of Plastics Technology Co., Ltd

Temperature of cooling roll: 50°C

Take-up speed: 4m/minute

[Table 1]

| | | Example 1 | Example 2 | Example 3 | Example 4 | Example 5 | Example 6 | Example 7 |
|---|---|---|---|---|---|---|---|---|
| Composition of modified ethylene-vinyl alcohol copolymer (B | Type of resin | Synthesis Ex. 1 | Synthesis Ex. 6 | Synthesis Ex. 1 | Synthesis Ex. 1 | Synthesis Ex. 1 | Synthesis Ex. 1 | Synthesis Ex. 1 |
| | Species for modification | Epoxypropane | Epoxypropane | Epoxypropane | Epoxypropane | Epoxypropane | Epoxypropane | Epoxypropane |
| | Ethylene content (mol%) | 44 | 32 | 44 | 44 | 44 | 44 | 44 |
| Type of viscoelastic substance (C) | | Synthesis Ex. 5 | Synthesis Ex. 5 | Synthesis Ex. 5 | Synthesis Ex. 5 | Synthesis Ex. 3 | Polymer 1 | Synthesis Ex. 4 |
| Glass transition temperature (Tg) (°C) of viscoelastic substance (C) | | -60 | -60 | -60 | -60 | -60 | -42 | -94 |
| M100 (MPa) at-30°C of viscoelastic substance (C) | | 1.2 | 1.2 | 1.2 | 1.2 | 1.3 | 1.2 | 1.0 |
| Modified ethylene-vinyl alcohol copolymer (B/viscoelastic substance (C) (mass ratio) | | 80/20 | 80/20 | 80/20 | 70/30 | 80/20 | 80/20 | 80/20 |
| Dispersibility of viscoelastic substance (C) in resin composition (D) | | Good | Good | Good | Good | Good | Good | Good |
| Structure of film | | TPU/resin composition (D)/TPU | TPU/resin composition (D)/TPU | Resin composition (D) | Resin composition (D) | Resin composition (D) | Resin composition (D) | TPU/resin composition (D)/TPU |
| Thickness of each film (μm) | | 20/20/20 | 20/20/20 | 20 | 20 | 20 | 20 | 20/20/20 |
| Oxygen permeability ($cm^3$·cm/$cm^2$· sec · cm Hg) | Resin composition (D) | $0.009 \times 10^{-10}$ | $0.003 \times 10^{-10}$ | $0.009 \times 10^{-10}$ | $0.012 \times 10^{-10}$ | $0.009 \times 10^{-10}$ | $0.011 \times 10^{-10}$ | $0.008 \times 10^{-10}$ |
| | TPU layer | $4.6 \times 10^{-11}$ | $4.6 \times 10^{-11}$ | - | - | - | - | $4.6 \times 10^{-11}$ |
| | Lamination bodv | $0.03 \times 10^{-10}$ | $0.01 \times 10^{-10}$ | | | | | |
| Young's modulus (MPa) at -30°C of resin composition (D) | | 1500 or less | 1500 or less | 1500 or less | 1500 or less | 1500 or less | 1500 or less | 1500 or less |
| Thickness of auxiliary layer (rubber composition layer) (μm) | | 500 | | | | | | 500 |

(continued)

| | | Example 1 | Example 2 | Example 3 | Example 4 | Example 5 | Example 6 | Example 7 |
|---|---|---|---|---|---|---|---|---|
| Inner pressure retainability (Index) | Tire before running | 440 | | | | | | 440 |
| | Tire after running | 435 | | | | | | 435 |
| Tire appearance after running | | No cracks | | | | | | No cracks |

[Table 2]

| | | Example 8 | Example 9 | Example 10 | Example 11 | Example 12 | Example 13 |
|---|---|---|---|---|---|---|---|
| Composition of - modified ethylene-vinyl alcohol copolymer (B) | Type of resin | Synthesis Ex. 2 | Synthesis Ex. 1 | Synthesis Ex. 6 | Synthesis Ex. 1 | Synthesis Ex. 1 | Synthesis Ex. 1 |
| | Species for modification | Glycidol | Epoxypropane | Epoxypropane | Epoxypropane | Epoxypropane | Epoxypropane |
| | Ethylene content (mol%) | 44 | 44 | 32 | 44 | 44 | 44 |
| Type of viscoelastic substance (C) | | Synthesis Ex. 4 | Polymer 4 | Polymer 4 | Polymer 5 | Polymer 6 /Polymer 5 | Polymer 3 /Compound 1 |
| Glass transition temperature (Tg) (°C) of viscoelastic substance (C) | | -94 | -41 | -41 | -55 | -55 | -55 |
| M100 (MPa) at -30°C of viscoelastic substance (C) | | 1.0 | 5.8 | 5.8 | 5.8 | 5.8 | 2.2 |
| Modified ethylene-vinyl alcohol copolymer (B)/viscoelastic substance (C) (mass ratio) | | 80/20 | 80/20 | 80/20 | 40/60 | 80 /10 (Polymer 6) /10 (Polymer 5) | 70 /20 (Polymer 3) /10 (Compound 1) |
| Dispersibility of viscoelastic substance (C) in resin composition (D) | | Good | Good | Good | Good | Good | Good |
| Structure of film | | TPU/resin composition (D/TPU | TPU/resin composition (D)/TPU | TPU/resin composition (D)/TPU | TPU/resin composition (D)/TPU | Resin composition (D) | Resin composition (D) |
| Thickness of each film (μm) | | 20/20/20 | 20/20/20 | 20/20/20 | 20/20/20 | 20 | 20 |
| Oxygen permeability (cam · cm/cm$^2$ · sec • cm Hg) | Resin composition (D) | $0.008 \times 10^{-10}$ | $0.008 \times 10^{-10}$ | $0.0027 \times 10^{-10}$ | $0.017 \times 10^{-10}$ | $0.008 \times 10^{-10}$ | $0.012 \times 10^{-10}$ |
| | TPU layer | $4.6 \times 10^{-10}$ | $4.6 \times 10^{-10}$ | $4.6 \times 10^{-11}$ | $4.6 \times 10^{-11}$ | $4.6 \times 10^{-11}$ | $4.6 \times 10^{-11}$ |
| | Lamination body | $0.02 \times 10^{-10}$ | $0.02 \times 10^{-10}$ | $0.01 \times 10^{-10}$ | $0.05 \times 10^{-10}$ | | |
| Young's modulus (MPa) at-30°C of resin composition (D) | | 1500 or less | 1500 or less | 1500 or less | 1500 or less | 1500 or less | 1500 or less |
| Thickness of auxiliary layer (rubber composition layer) (μm) | | | | | | | |

(continued)

| | | Example 8 | Example 9 | Example 10 | Example 11 | Example 12 | Example 13 |
|---|---|---|---|---|---|---|---|
| Inner pressure retainability (Index) | Tire before running | | | | | | |
| | Tire after running | | | | | | |
| Tire appearance after running | | | | | | | |

[Table 3]

| | | Example 14 | Example 15 | Comp. Example 1 | Comp. Example 2 | Comp. Example 3 |
|---|---|---|---|---|---|---|
| Composition of modified ethylene-vinyl alcohol copolymer (B) | Type of resin | Synthesis Ex. 1 | Synthesis Ex. 1 | No film | Synthesis Ex. 1 | Film example 1 |
| | Species for modification | Epoxypropane | Epoxypropane | - | Epoxypropane | Nylon |
| | Ethylene content (mol %) | 44 | 44 | - | 44 | - |
| Type of viscoelastic substance (C) | | Polymer 7 | Polymer 7 /Polymer 8 | - | Polymer 2 | Polymer 3 |
| Glass transition temperature (Tg) (°C) of viscoelastic substance (C) | | -45 | -50 | - | -50 | -55 |
| M100 (MPa) at-30°C of viscoelastic substance (C) | | 5 | 5.6 | - | 7.4 | 2.2 |
| Modified ethylene-vinyl alcohol copolymer (B)/viscoelastic substance (C) (mass ratio) | | 80/20 | 80/10 (Polymer 7) /10 (Polymer 8) | - | 80/20 | 30/70 |
| Dispersibility of viscoelastic substance (C) in resin composition (D) | | Good | Good | - | Good | Good |
| Structure of film | | Resin composition (D) | TPU/resin composition (D)/TPU | - | Resin composition (D) | Nylon |
| Thickness of each film (μm) | | 20 | 20/20/20 | - | 20 | 20 |
| Oxygen permeability ($cm^3 \cdot cm/cm^2 \cdot sec \cdot cm Hg$) | Resin composition (D) | $0.007 \times 10^{-10}$ | $0.007 \times 10^{-10}$ | - | $0.093 \times 10^{-10}$ | $0.1 \times 10^{-10}$ |
| | TPU layer | $4.6 \times 10^{-11}$ | $4.6 \times 10^{-11}$ | - | - | |
| | Lamination body | $0.02 \times 10^{-10}$ | $0.02 \times 10^{-10}$ | | | |
| Young's modulus (MPa) at-30°C of resin composition (D) | | 1500 or less | 1500 or less | - | 1500 or less | 1500 or less |
| Thickness of auxiliary layer (rubber composition layer) (μm) | | | | 1500 | 500 | |
| Inner pressure retainability (Index) | Tire before running | | | 100 | 45 | |
| | Tire after running | | | 100 | 9 | |
| Tire appearance after running | | | | No cracks | Cracks exist | |

As is obvious from Tables 1 to 3, inner pressure retainability is significantly improved both before and after running and no cracks has been generated after running in the tires of Examples, as compared with the tires of Comparative Examples. Further, the rubber composition layers of the tires of Examples are thinner than those of the tires of

Comp. Examples, whereby the former can reduce the weight of an inner liner and thus the weight of the tire as a whole. In Example 1 and Example 7, the viscoelastic substances (C) thereof each include isocyanate group having relatively high affinity for hydroxyl group, whereby in these Examples the viscoelastic substances (C) each exhibit good dispersibility in the resin composition and retaining good barrier properties and retaining good crack resistance can be made compatible with each other. In Comparative Example 2, 100% modulus at -30°C of the viscoelastic substance (C) thereof exceeds 6MPa, whereby the resin composition (D) thereof cannot retain softness and cracks have been generated in the inner liner after running of the tire. In contrast, the tire of Example 4, including random styrene copolymers, can maintain softness of the resin composition (D). Accordingly, it is preferable that the inner liner of the present invention includes at least a layer composed of the resin composition (D) produced by dispersing the viscoelastic substance (C) in a resin containing modified ethylene-vinyl alcohol copolymer (B) obtained by subjecting the ethylene-vinyl alcohol copolymer (A) to a reaction, wherein 100% modulus at -30°C of the viscoelastic substance (C) is smaller than 6MPa.

(Preparation of films and pneumatic tires of Examples 16 to 26 and Comparative Examples 4 and 5)

The modified ethylene-vinyl alcohol copolymer obtained by one of Synthesis Examples 1,2 and 6 was each blended with the viscoelastic substances (C) as shown in Tables 4-6 by a two-shaft extruder, whereby the resin compositions (D) having blending protocols shown in Tables 4 to 6 are obtained.

Regarding the viscoelastic substance (C): blend of "Dynalon 8630P" (Polymer 7) and "Dynalon 4630P" (Polymer 8) each manufactured by JSR Corporation was used in Examples 16, 24, 25 and 26; blend of the isocyanate-modified SBR synthesized in Synthesis Example 5 and the unmodified SBR (Polymer 9, "#1500" manufactured by JSR Corporation) was used in Example 17; blend of the epoxy-modified E-NR (Polymer 1, i.e. "EPOXYPRENE 25" manufactured by Mu-ang Mai Guthrie Public Co., Ltd.) and "IR2200" (Polymer 10) manufactured by Zeon Corporation was used in Example 18; blend of the epoxy-modified NR-50 ("EPOXYPRENE 50" manufactured by Mu-ang Mai Guthrie Public Co., Ltd., i.e. Polymer 11) and "IR2200" (Polymer 10) manufactured by Zeon Corporation was used in Example 19; blend of the isocyanate-modified BR synthesized in Synthesis Example 4 and the unmodified BR (Polymer 12, "BR01" manufactured by JSR Corporation) was used in Example 20; "TAFMER MH7020" (Polymer 5) manufactured by Mitsui Chemicals, Inc. was used Example 21; blend of the unmodified polyolefin copolymer (unmodified EB, "1050S" manufactured by JSR Corporation, i.e. Polymer 6) and the modified copolymer polyolefin (modified EB, "TAFMER MH7020" manufactured by Mitsui Chemicals, Inc., i.e. Polymer 5) was used in Example 22; blend of the bromoisobutylene-p-methylstyrene ("Exxpro89-4" manufactured by ExxonMobil Chemical, i.e. Polymer 3) and glycidylamine ("EPICLON 430" as tetraglycidylamine, DDM, manufactured by DIC Corporation, i.e. Compound 1) was used in Example 23; epoxy-modified SBR manufactured by Daicel Chemical Industries, Ltd. (Polymer 13) was used in Comparative Example 4; and "Taftec M1943" manufactured by Asahi Chemical Industry Co., Ltd. (Polymer 2) was used in Comparative Example 5.

Further, Young's modulus at -30°C of the resin composition (D) was measured by using the Young's modulus measuring method described above. Yet further, 100% modulus of the viscoelastic substance was measured according to JIS K6251-1993 by using JIS No. 3 dumbbell-shape test piece. The results are shown in Tables 4 to 6.

Next, a three-layered film of Example 24 (thermoplastic polyurethane layer/resin composition (D) layer/thermoplastic polyurethane layer) was prepared by a two-type-three-layer coextruder by using the relevant resin compositions (D) thus obtained and thermoplastic polyurethane (TPU) ("Kuramilon 3190" manufactured by Kuraray Co., Ltd.) under the coextrusion molding conditions described below. Thicknesses of the respective layers used in the film of Example 24 and film thickness of Examples 16-23,25-26 and Comp. Example 4 are shown in Tables 4 to 6. In Examples and Comp. Examples other than Example 24, each film was structured as a single-layer film of the resin composition (D). It was impossible to form a film in Comparative Example 5.

Next, each of the films of Examples 16 to 26 and Comp. Example 4 was irradiated with electron beam for crosslinking under a condition of acceleration voltage: 200kV and irradiation energy: 30Mrad by using "Curetron for industrial production EBC200-100" as an electron beam irradiation device manufactured by NHV Corporation. In Examples 16, 20 and 24, "Metalock R30M" manufactured by Toyo Kagaku Laboratory was coated as the adhesive layer (G) on one surface of the crosslinked film thus obtained and then the film was attached to the inner surface of the auxiliary layer (F) of 500$\mu$m thickness to prepare an inner liner. In Examples 17-19, 21-23, 25-26 and Comp. Example 4, the obtained film was used, as it was, as an inner liner.

A pneumatic tire of size: 195/65R15 for passenger car, having the structure as shown in FIG. 1, was prepared according to the conventional method by using each of the inner liners thus obtained. The compositions and the like of the films used in the inner liners are shown in Tables 4 to 6.

Regarding the auxiliary layer (F), rubber compositions which are the same as those employed in Examples 1 to 7 and Comp. Example 2 are used.

The extruding conditions of the respective resins are the same as those in Examples 1 to 15 and Comp. Examples 1 to 3.

[Table 4]

| | | Example 16 | Example 17 | Example 18 | Example 19 | Example 20 | Example 21 |
|---|---|---|---|---|---|---|---|
| Composition of _ modified ethylene-vinyl alcohol copolymer (B) | Type of resin | Synthesis Ex. 1 | Synthesis Ex. 21 | Synthesis Ex. 1 | Synthesis Ex. 1 | Synthesis Ex. 1 | Synthesis Ex. 1 |
| | Species for modification | Epoxypropane | Epoxypropane | Epoxypropane | Epoxypropane | Epoxypropane | Epoxypropane |
| | Ethylene content (mol %) | 44 | 44 | 44 | 44 | 44 | 44 |
| Type of viscoelastic substance (C) | | Polymer 8 /Polymer 7 | Synthesis Ex. 5 /Polymer 9 | Polymer 1 /Polymer 10 | Polymer 11 /Polymer 10 | Synthesis Ex. 4 /Polymer 12 | Polymer 5 |
| Glass transition temperature (Tg) (°C) of viscoelastic substance (C) | | -50 | -60 | -42 | -55 | -94 | -50 |
| M100 (MPa) at -30°C of viscoelastic substance (C) | | 5.6 | 1.2 | 1.2 | 2.0 | 1.0 | 5.8 |
| Modified ethylene-vinyl alcohol copolymer (B)/viscoelastic substance (C) (mass ratio) | | 50 /25 (Polymer 8) /25 (Polymer 7) | 50 /25 (Synthesis Ex. 5) /25 (Polymer 9) | 50 /25 (Polymer 1) /25 (Polymer 10) | 50 /10 (Polymer 11) /40 (Polymer 10) | 50/ 25 (Synthesis Ex. 4) /25 (Polymer 12) | 40/60 |
| Dispersibility of viscoelastic substance (C) in resin composition (D) | | Good | Good | Good | Good | Good | Good |
| Structure of film | | Resin composition (D) | Resin composition (D) | Resin composition (D) | Resin composition (D) | Resin composition (D) | Resin composition (D) |
| Thickness of each film (μm) | | 50 | 50 | 50 | 50 | 50 | 50 |
| Oxygen permeability ($cm^3 \cdot cm/cm^2 \cdot sec \cdot cm\ Hg$) | Resin composition (D) | $0.018 \times 10^{-10}$ | $0.017 \times 10^{-10}$ | $0.017 \times 10^{-10}$ | $0.017 \times 10^{-10}$ | $0.019 \times 10^{-10}$ | $0.013 \times 10^{-10}$ |
| | TPU layer | | | | | | |
| Young's modulus (MPa) at -30°C of resin composition (D) | | 1000 or less | 1000 or less | 1000 or less | 1000 or less | 1000 or less | 1000 or less |
| Thickness of auxiliary layer (rubber composition layer) (μm) | | 500 | | | | 500 | |

(continued)

| | | Example 16 | Example 17 | Example 18 | Example 19 | Example 20 | Example 21 |
|---|---|---|---|---|---|---|---|
| Inner pressure retainability (Index) | Tire before running | 440 | | | | 440 | |
| | Tire after running | 436 | | | | 435 | |
| Tire appearance after running | | No cracks | | | | No cracks | |

[Table 5]

| | | Example 22 | Example 23 | Example 24 |
|---|---|---|---|---|
| Composition of modified ethylene-vinyl alcohol copolymer (B) | Type of resin | Synthesis Ex. 1 | Synthesis Ex. 1 | Synthesis Ex. 1 |
| | Species for modification | Epoxypropane | Epoxypropane | Epoxypropane |
| | Ethylene content (mol %) | 44 | | 44 |
| Type of viscoelastic substance (C) | | Polymer 6 /Polymer 5 | Polymer 3 /Compound 1 | Polymer 8 /Polymer 7 |
| Glass transition temperature (Tg (°C) of viscoelastic substance (C) | | -50 | -55 | -50 |
| M100 (MPa) at -30°C of viscoelastic substance (C) | | 5.5 | 2.2 | 5.6 |
| Modified ethylene-vinyl alcohol copolymer (B)/viscoelastic substance (C) (mass ratio) | | 50/25 (Polymer 6) /25 (Polymer 5) | 50/45 (Polymer 3) /5 (Compound 1) | 35/42 (Polymer 8) /23 (Polymer 7) |
| Dispersibility of viscoelastic substance (C) in resin composition (D) | | Good | Good | Good |
| Structure of film | | Resin composition (D) | Resin composition (D) | TPU/resin composition (D)/TPU |
| Thickness of each film (μm) | | 20 | 20 | 20/50/20 |
| Oxygen permeability ($cm^3$ $cm/cm^2$ · sec · cm Hg) | Resin composition (D) | $0.018 \times 10^{-10}$ | $0.020 \times 10^{-10}$ | $0.022 \times 10^{-10}$ |
| | TPU layer | | | $4.6 \times 1_{0}^{-11}$ |
| Young's modulus (MPa) at -30°C of resin composition (D) | | 1000 or less | 1000 or less | 1000 or less |
| Thickness of auxiliary layer (rubber composition layer) (μm) | | | | 500 |
| Inner pressure retainability (Index) | Tire before running | | | 440 |
| | Tire after running | | | 437 |
| Tire appearance after running | | | | No cracks |

[Table 6]

| | | Example 25 | Example 26 | Comp. Example 4 | Comp. Example 5 |
|---|---|---|---|---|---|
| Composition of modified ethylene-vinyl alcohol copolymer (B) | Type of resin | Synthesis Ex. 6 | Synthesis Ex. 2 | Synthesis Ex. 1 | Synthesis Ex. 1 |
| | Species for modification | Epoxypropane | Glycidol | Epoxypropane | Epoxypropane |
| | Ethylene content (mol %) | 32 | 44 | 44 | 44 |
| Type of viscoelastic substance (C) | | Polymer 8 /Polymer 7 | Polymer 8 /Polymer 7 | Polymer 13 | Polymer 2 |

(continued)

| | | Example 25 | Example 26 | Comp. Example 4 | Comp. Example 5 |
|---|---|---|---|---|---|
| Glass transition temperature (Tg) (°C) of viscoelastic substance (C) | | -50 | -50 | -20 | -55 |
| M100 (MPa) at -30°C of viscoelastic substance (C) | | 5.6 | 5.6 | 10 | 7.4 |
| Modified ethylene-vinyl alcohol copolymer (B/viscoelastic substance (C) (mass ratio) | | 40/30 (Polymer 8) /30 (Polymer 7) | 40/30 (Polymer 8) /30 (Polymer 7) | 80/20 | 40/60 |
| Dispersibility of viscoelastic substance (C) in resin composition (D) | | Good | Good | Good | Poor |
| Structure of film | | Resin composition (D) | Resin composition (D) | Resin composition (D) | Resin composition (D) |
| Thickness of each film (μm) | | 20 | 20 | 20 | Impossible to form |
| Oxygen permeability ($cm^3 \cdot cm/cm^2 \cdot sec \cdot cm$ Hg) | Resin composition (D) | $0.004 \times 10^{-10}$ | $0.012 \times 10^{-10}$ | $0.010 \times 10^{-10}$ | |
| | TPU layer | | | | |
| Young's modulus (MPa) at -30°C of resin composition (D) | | 1000 or less | 1000 or less | 1000 or less | |
| Thickness of auxiliary laver (rubber composition layer) (μm) | | | | 500 | |
| Inner pressure retainability (Index) | Tire before running | | | 44 | |
| | Tire after running | | | 10 | |
| Tire appearance after running | | | | Cracks exist | |

## Claims

1. A film, comprising at least a layer composed of resin composition (D) produced by dispersing viscoelastic substance (C) in a resin containing modified ethylene-vinyl alcohol copolymer (B) obtained by reacting 1 to 50 parts by mass of an epoxy compound (E) with 100 parts by mass of ethylene-vinyl alcohol copolymer (A),
wherein 100% modulus measured according to JIS K6251-1993 by using JIS No. 3 dumbbell-shape test piece at -30°C of the viscoelastic substance (C) is smaller than 6MPa.

2. The film of claim 1, wherein the viscoelastic substance (C) contains soft polymer having a functional group which exhibits affinity for hydroxyl group.

3. The film of claim 1, wherein the vicoelastic substance (C) either has been modified by at least one type of compound selected from the group consisting of compounds each having a functional group containing maleic acid, maleic anhydride, isocianate, isothiacyanate, alkoxysilane, epoxy, amine or boron, or includes soft polymer having a boron-containing group introduced therein.

4. The film of claim 1, wherein the saponification value of the ethylene-vinyl alcohol copolymer (A) is 90% or higher.

5. The film of claim 1, wherein the molecular weight of the epoxy compound (E) is not larger than 500.

6. The film of claim 1, wherein the epoxy compound (E) is glycidol or epoxypropane.

7. The film of claim 1, wherein a content of ethylene in the ethylene-vinyl alcohol copolymer (A) is in the range of 25 to 50 mol %.

8. The film of claim 1, wherein Young's modulus at -30°C of the resin composition (D) is not larger than 1500 MPa, the Young's Modulus is measured by producing a single-layered film test piece having 20μm thickness and 15mm width, the test piece is left indoors for one week under a condition of temperature -36°C (kept constant) and 50% RH, thereafter the S-S curve (stress-strain curve) at -30°C and 50% RH is measured under the condition of chuck interval: 50mm and tensile speed: 50mm and Young's modulus is obtained from the initial tangent of the S-S curve.

9. The film of claim 1, wherein a content of the viscoelastic substance (C) in the resin composition (D) is in the range of 10 to 70 mass %.

10. The film of claim 1, wherein the layer composed of the resin composition (D) is cross-linked.

11. The film of claim 1, wherein the layer composed of the resin composition (D) has oxygen permeability, measured twice according to JIS K7126 and then averaged, at 20°C and 65%RH not larger than $3.0 \times 10^{-12}$ $cm^3 \cdot cm/cm^2 \cdot sec \cdot cm$ Hg.

12. The film of claim 1, wherein thickness of each layer composed of the resin composition (D) is not larger than 500μm.

13. The film of claim 1, wherein at least one auxiliary layer (F) composed of elastomer is provided adjacent to the layer composed of the resin composition (D).

14. The film of claim 13, wherein the elastomer is selected from the group consisting of olefin-based elastomer, diene-based elastomer, hydrogenated diene-based elastomer, and urethane-based elastomer.

15. The film of claim 13, wherein the layer composed of the resin composition (D) is interposed between the auxiliary layers (F).

16. The film of claim 13, wherein at least one adhesive layer (G) is provided at at least one of: between the layer composed of the resin composition (D) and the auxiliary layer (F) adjacent thereto; and between the adjacent auxiliary layers (F).

17. The film of claim 13, wherein each auxiliary layer (F) has oxygen permeability (measured twice according to JIS K7126 and then averaged) at 20°C and 65%RH not larger than $3.0 \times 10^{-9}$ $cm^3 \cdot cm/cm^2 \cdot sec \cdot cm$ Hg.

18. The film of claim 13, wherein each auxiliary layer (F) includes butyl rubber and/or halogenated butyl rubber.

19. The film of claim 13, wherein each auxiliary layer (F) includes diene-based elastomer.

20. The film of claim 13, wherein each auxiliary layer (F) includes thermoplastic urethane-based elastomer.

21. The film of claim 13, wherein the sum of the thicknesses of the auxiliary layers (F) is in the range of 10 to 2000 μm.

22. An inner liner for tire, comprising the film of any of claims 1 to 21.

23. A tire, comprising the inner liner of claim 22.

24. A tire, comprising an inner liner for tire, the inner liner using the film of any of claims 13 to 21,
wherein the sum of thicknesses of the auxiliary layers (F) at a portion thereof having at least 30mm width, in a side region from an end of a belt to a bead portion, is larger by at least 0.2mm than the sum of thicknesses of the auxiliary layers (F) at a portion thereof corresponding to the belt.

## Patentansprüche

1. Film umfassend mindestens eine Schicht, die aus einer Harzzusammensetzung (D) besteht, die durch Dispergieren einer viskoelastischen Substanz (C) in einem Harz hergestellt wird, das ein modifiziertes Ethylen-Vinylalkohol-Copolymer (B) enthält, das durch Reagieren von 1 bis 50 Masseteilen einer Epoxyverbindung (E) mit 100 Masseteilen Ethylen-Vinylalkohol-Copolymer (A) erhalten wird,
wobei der 100 %-Modul, JIS K6251-1993 entsprechend durch Verwendung eines hantelförmigen Probekörpers JIS Nr. 3 der viskoelastischen Substanz (C) bei -30 °C gemessen, geringer als 6 MPa ist.

2. Film nach Anspruch 1, wobei die viskoelastische Substanz (C) weiches Polymer enthält, das eine funktionelle Gruppe aufweist, die eine Affinität für Hydroxylgruppen aufweist.

3. Film nach Anspruch 1, wobei die viskoelastische Substanz (C) entweder durch mindestens einen Typ Verbindung modifiziert worden ist, ausgewählt aus der Gruppe bestehend aus Verbindungen, die jeweils eine funktionelle Gruppe aufweisen, die Maleinsäure, Maleinsäureanhydrid, Isocyanat, Isothiocyanat, Alkoxysilan, Epoxy, Amin oder Bor enthält oder ein weiches Polymer enthält, das eine darin eingeführte borhaltige Gruppe aufweist.

4. Film nach Anspruch 1, wobei der Verseifungswert des Ethylen-Vinylalkohol-Copolymers (A) 90 % oder höher beträgt.

5. Film nach Anspruch 1, wobei das Molekulargewicht der Epoxyverbindung (E) nicht höher als 500 ist

6. Film nach Anspruch 1, wobei die Epoxyverbindung (E) Glycidol oder Epoxypropan ist.

7. Film nach Anspruch 1, wobei der Gehalt an Ethylen in dem Ethylen-Vinylalkokohl-Cpolymer (A) im Bereich von 25 bis 50 Mol-% liegt.

8. Film nach Anspruch 1, wobei der Young-Modul bei -30 °C der Harzzusammensetzung (D) nicht höher als 1500 MPa ist, der Young-Modul durch Herstellen eines Einzelschichtfilm-Probekörpers, der eine Dicke von 20 μm und eine Breite von 15 mm aufweist, gemessen wird, der Probekörper eine Woche lang unter einer Temperaturbedingung von -36 °C (wird konstant gehalten) und 50 % RF gehalten wird, daraufhin die S-S-Kurve (Spannungs-Dehnungskurve) bei -30 °C und 50° RF unter der Spannfutterabstandsbedingung: 50 mm und Zuggeschwindigkeit: 50 mm gemessen wird und der Young-Modul von der anfänglichen Tangente der S-S erhalten wird.

9. Film nach Anspruch 1, wobei ein Gehalt der viskoelastischen Substanz (C) in der Harzzusammensetzung (D) im Bereich von 10 bis 70 Masse-% liegt.

10. Film nach Anspruch 1, wobei die aus der Harzzusammensetzung (D) bestehende Schicht vernetzt ist.

11. Film nach Anspruch 1, wobei die aus der Harzzusammensetzung (D) bestehende Schicht eine Sauerstoffdurchlässigkeit, zweimal JIS K7126 entsprechend gemessen und dann gemittelt, bei 20 °C und 65 % RF nicht mehr als 3,0 x $10^{-12}$ $cm^3$ · $cm/cm^2$ · sec · cm Hg aufweist

12. Film nach Anspruch 1, wobei die Dicke jeder aus der Harzzusammensetzung (D) bestehenden Schicht nicht mehr als 500 μm beträgt

13. Film nach Anspruch 1, wobei mindestens eine aus Elastomer bestehende Hilfsschicht (F) an der Schicht anliegend bereitgestellt wird, die aus der Harzzusammensetzung (D) besteht.

14. Film nach Anspruch 13, wobei das Elastomer aus der Gruppe ausgewählt wird bestehend aus Elastomer auf der Basis von Olefin, Elastomer auf der Basis von Dien, Elastomer auf der Basis von hydriertem Dien und Elastomer auf der Basis von Urethan.

15. Film nach Anspruch 13, wobei die aus der Harzzusammensetzung (D) bestehende Schicht zwischen den Hilfsschichten (F) eingeschoben ist.

16. Film nach Anspruch 13, wobei mindestens eine Klebstoffschicht (G) an mindestens einem bereitgestellt wird: zwischen der aus der Harzzusammensetzung (D) bestehenden Schicht und der daran anliegenden Hilfsschicht (F); und zwischen den aneinander anliegenden Hilfsschichten (F).

17. Film nach Anspruch 13, wobei die Hilfsschicht (F) eine Sauerstoffdurchlässigkeit (zweimal JIS K7126 entsprechend gemessen und dann gemittelt) bei 20 °C und 65 % RF nicht mehr als 3,0 x $10^{-9}$ $cm^3 \cdot cm/cm^2 \cdot sec \cdot cm$ Hg aufweist.

18. Film nach Anspruch 13, wobei jede Hilfsschicht (F) Butylkautschuk und/oder halogenierten Butylkautschuk umfasst.

19. Film nach Anspruch 13, wobei jede Hilfsschicht (F) ein Elastomer auf der Basis von Dien umfasst.

20. Film nach Anspruch 13, wobei jede Hilfsschicht (F) thermoplastisches Elastomer auf der Basis von Urethan umfasst.

21. Film nach Anspruch 13, wobei die Summe der Dicken der Hilfsschichten (F) im Bereich von 10 bis 2000 μm liegt.

22. Innerliner für einen Reifen, umfassend den Film nach einem der Ansprüche 1 bis 21.

23. Reifen umfassend den Innerliner nach Anspruch 22.

24. Reifen, umfassend einen Innerliner für Reifen, wobei bei dem Innerliner der Film nach einem der Ansprüche 13 bis 21 verwendet wird,
wobei die Summe der Dicken der Hilfsschichten (F) an einem Teil davon, der mindestens eine Breite von 30 mm aufweist, in einem Seitenbereich von einem Ende eines Gürtels bis zu einem Reifenwulstteil mindestens 0,2 mm größer ist als die Summe der Dicken der Hilfsschichten (F) an einem Teil davon, der dem Gürtel entspricht.

## Revendications

1. Film, comprenant au moins une couche composée d'une composition de résine (D) produite en dispersant une substance viscoélastique (C) dans une résine contenant un copolymère d'éthylène-alcool de vinyle modifié (B) obtenu en faisant réagir de 1 à 50 parties en masse d'un composé époxy (E) avec 100 parties en masse d'un copolymère d'éthylène-alcool de vinyle (A),
où le module à 100 % mesuré selon la norme JIS K6251-1993 en utilisant une éprouvette en forme d'haltère JIS n° 3 à -30°C de la substance viscoélastique (C) est inférieur à 6 MPa.

2. Film selon la revendication 1, où la substance viscoélastique (C) contient un polymère mou ayant un groupe fonctionnel qui fait preuve d'affinité pour le groupe hydroxyle.

3. Film selon la revendication 1, où la substance viscoélastique (C) a été soit modifiée par au moins un type de composé sélectionné dans le groupe constitué de composés ayant chacun un groupe fonctionnel contenant de l'acide maléique, de l'anhydride maléique, de l'isocyanate, de l'isothiocyanate, de l'alcoxysilane, un composé époxy, amine ou bore, ou incluant un polymère mou ayant un groupe contenant du bore introduit à l'intérieur.

4. Film selon la revendication 1, où la valeur de saponification du copolymère d'éthylène-alcool de vinyle (A) est de 90 % ou plus.

5. Film selon la revendication 1, où le poids moléculaire du composé époxy (E) n'est pas supérieur à 500.

6. Film selon la revendication 1, où le composé époxy (E) est le glycidol ou l'époxypropane.

7. Film selon la revendication 1, où une teneur de l'éthylène dans le copolymère d'éthylène-alcool de vinyle (A) se situe dans la plage de 25 à 50 % en mole.

8. Film selon la revendication 1, où le module de Young à -30°C de la composition de résine (D) ne dépasse pas 1 500 MPa, le module de Young est mesuré en produisant une éprouvette à film à couche unique ayant une épaisseur de 20 μm et une largeur de 15 mm, l'éprouvette est laissée à l'intérieur durant une semaine sous des conditions de température de -36°C (maintenue constante) et 50 % d'HR, par la suite la courbe S-S (courbe de contrainte-allongement) à -30°C et 50 % d'HR est mesurée sous des conditions d'intervalle de mandrin: 50 mm et vitesse de traction: 50 mm et le module de Young est obtenu à partir de la tangente initiale de la courbe S-S.

9. Film selon la revendication 1, où une teneur de la substance viscoélastique (C) dans la composition de résine (D) se situe dans la plage de 10 à 70 % en masse.

**10.** Film selon la revendication 1, où la couche composée de la composition de résine (D) est réticulée.

**11.** Film selon la revendication 1, où la couche composée de la composition de résine (D) présente une perméabilité à l'oxygène, mesurée deux fois selon la norme JIS K7126 et la moyenne ensuite calculée, à 20°C et 65 % d'HR non supérieure à $3,0 \times 10^{-12}$ $cm^3$•cm/$cm^2$•sec•cm Hg.

**12.** Film selon la revendication 1, où l'épaisseur de chaque couche composée de la composition de résine (D) n'est pas supérieure à 500 $\mu$m.

**13.** Film selon la revendication 1, où au moins une couche auxiliaire (F) composée d'élastomère est prévue de manière adjacente à la couche composée de la composition de résine (D).

**14.** Film selon la revendication 13, où l'élastomère est sélectionné dans le groupe constitué d'un élastomère à base d'oléfine, d'un élastomère à base de diène, d'un élastomère à base de diène hydrogéné, et d'un élastomère à base d'uréthane.

**15.** Film selon la revendication 13, où la couche composée de la composition de résine (D) est interposée entre les couches auxiliaires (F).

**16.** Film selon la revendication 13, où au moins une couche adhésive (G) est prévue au niveau d'au moins l'une parmi: une position située entre la couche composée de la composition de résine (D) et la couche auxiliaire (F) adjacente à celle-ci; et entre les couches auxiliaires adjacentes (F).

**17.** Film selon la revendication 13, où chaque couche auxiliaire (F) présente une perméabilité à l'oxygène (mesurée deux fois selon la norme JIS K7126 et la moyenne ensuite calculée) à 20°C et 65 % d'HR non supérieure à $3,0 \times 10^{-9}$ $cm^3$•cm/$cm^2$•sec•cm Hg.

**18.** Film selon la revendication 13, où chaque couche auxiliaire (F) inclut du caoutchouc de butyle et/ou du caoutchouc de butyle halogéné.

**19.** Film selon la revendication 13, où chaque couche auxiliaire (F) inclut un élastomère à base de diène.

**20.** Film selon la revendication 13, où chaque couche auxiliaire (F) inclut un élastomère à base d'uréthane thermoplastique.

**21.** Film selon la revendication 13, où la somme des épaisseurs des couches auxiliaires (F) se situe dans la plage de 10 à 2 000 $\mu$m.

**22.** Gomme intérieure pour pneumatique, comprenant le film selon l'une quelconque des revendications 1 à 21.

**23.** Pneumatique, comprenant la gomme intérieure selon la revendication 22.

**24.** Pneumatique, comprenant une gomme intérieure pour pneumatique, la gomme intérieure utilisant le film selon l'une quelconque des revendications 13 à 21,
où la somme des épaisseurs des couches auxiliaires (F) à une partie de celles-ci ayant au moins 30 mm de largeur, dans une région latérale depuis une extrémité d'une nappe d'armature jusqu'à une partie de talon, est supérieure à au moins 0,2 mm par rapport à la somme des épaisseurs des couches auxiliaires (F) à une partie de celles-ci correspondant à la nappe d'armature.

FIG. 1

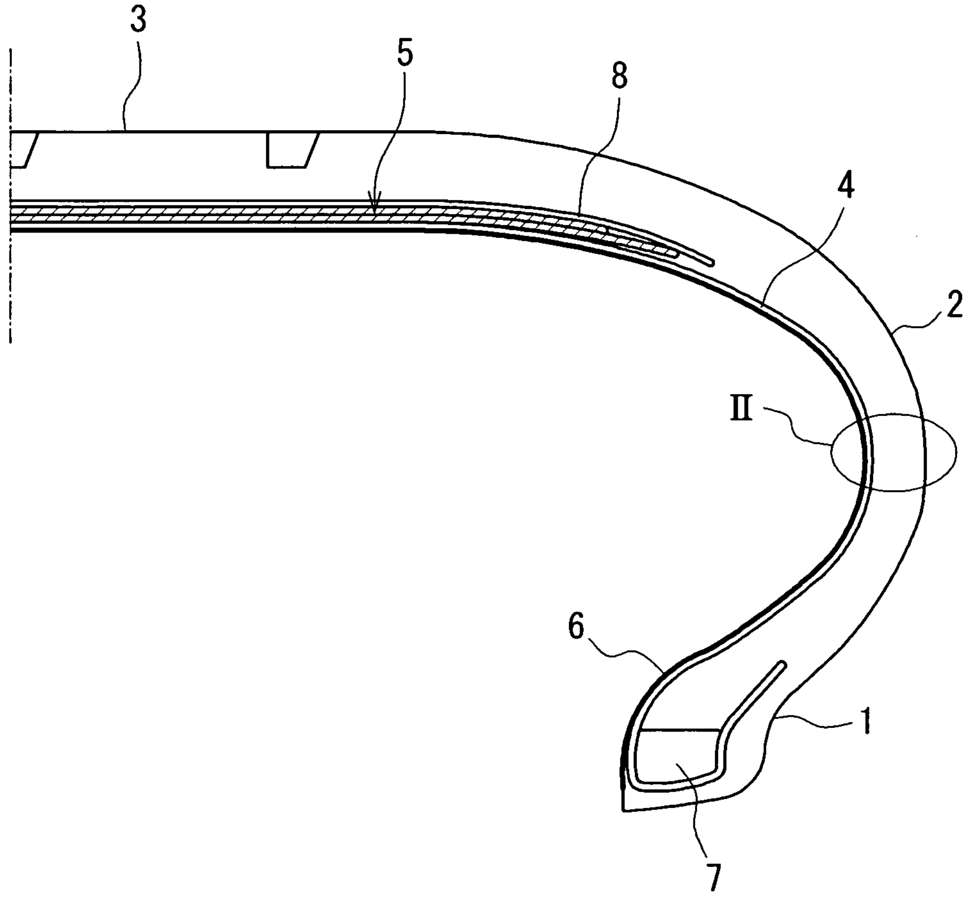


FIG. 2

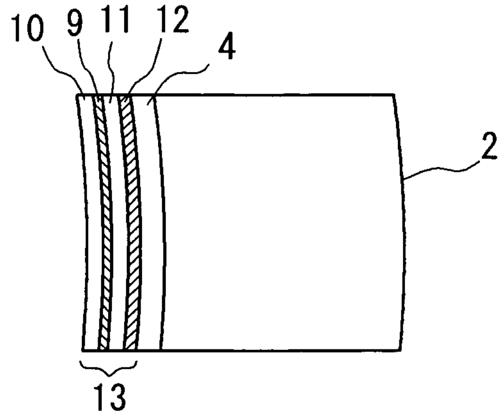

FIG. 3

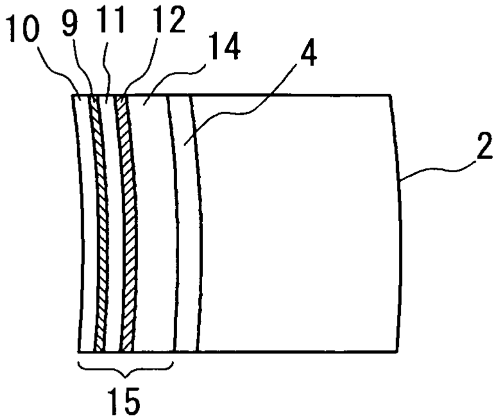


FIG. 4

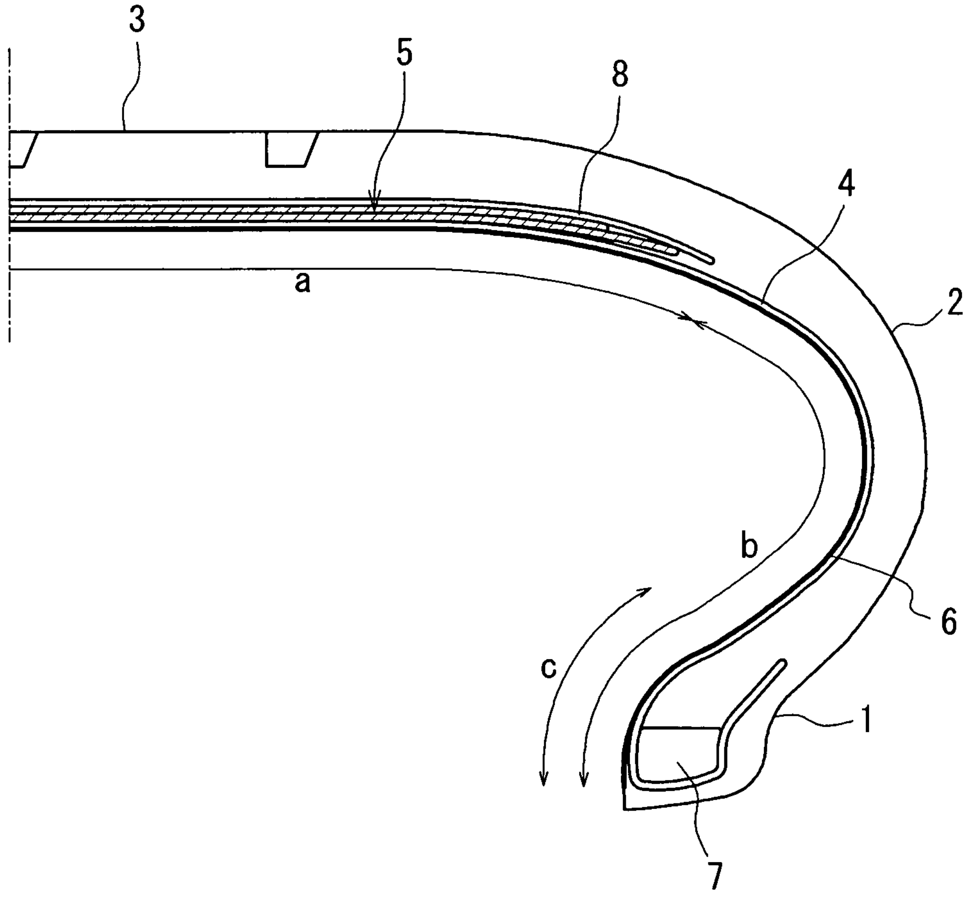

FIG. 5

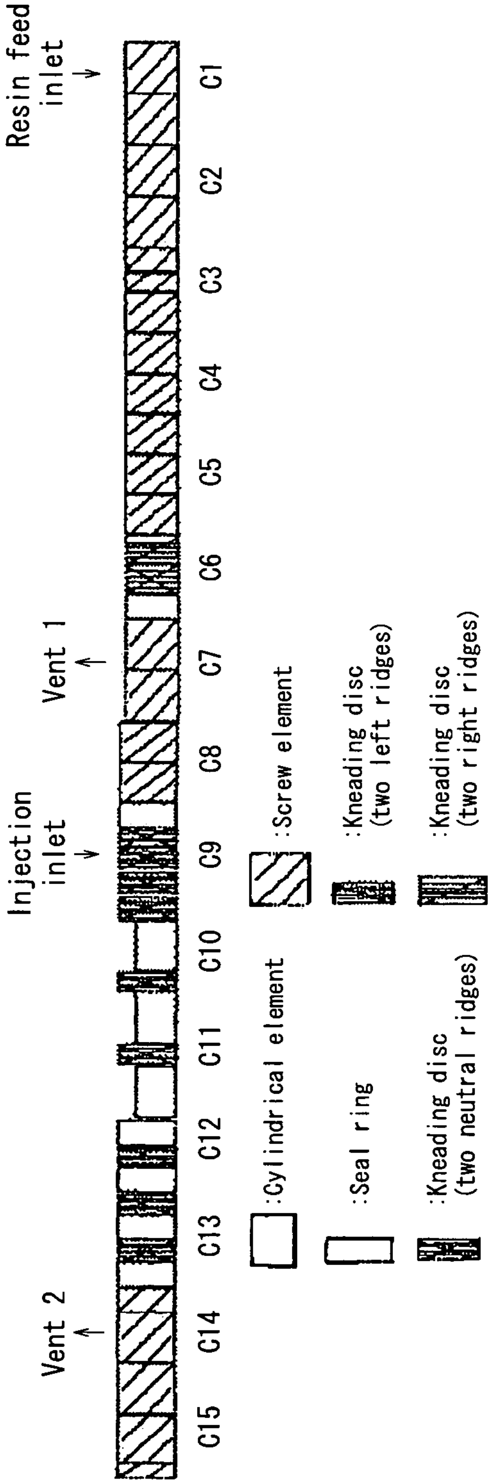
Resin feed inlet
Vent 1
Injection inlet
Vent 2
C1
C2
C3
C4
C5
C6
C7
C8
C9
C10
C11
C12
C13
C14
C15
:Cylindrical element
:Screw element
:Seal ring
:Kneading disc (two left ridges)
:Kneading disc (two neutral ridges)
:Kneading disc (two right ridges)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 11199713 A
- JP 6040207 A
- JP 2002052904 A
- JP 2004176048 A
- EP 2045102 A1
- JP 2008024220 A